# FASCICULE DE BREVET EUROPEEN

(11) **EP 2 801 560 B1**
(45) Date de publication et mention de la délivrance du brevet: **21.08.2019**
(21) Numéro de dépôt: 14167185.9
(22) Date de dépôt: 06.05.2014
(51) Int. Cl.: C04B 35/10, C04B 35/48, C04B 35/56, C04B 35/632, C04B 35/634, B22F 3/22, C04B 35/584, C04B 26/06

(54) **Procédé de malaxage de matière première pour métallurgie des poudres**
Mischverfahren für Rohstoffe für die Pulvermetallurgie
Method of mixing raw material for powder metallurgy

(30) Priorité: 07.05.2013 CH 9232013; 17.05.2013 CH 9842013; 28.05.2013 CH 10212013; 15.07.2013 EP 13176532; 26.07.2013 EP 13178141
(43) Date de publication de la demande: 12.11.2014
(73) Titulaire: Comadur S.A., 2400 Le Locle (CH)
(72) Inventeur: Cartier, Damien, 25000 Besançon (FR)
(74) Mandataire: Giraud, Eric

(56) Documents cités:
- EP-A1- 0 956 918
- EP-A1- 2 338 590
- EP-A2- 1 344 593
- US-A- 5 266 264
- US-A1- 2004 217 524

## Description

### Domaine de l'invention

L'invention concerne un procédé de malaxage de matière première pour métallurgie des poudres, en particulier pour la fabrication de granulés feedstock d'un type de céramique donné à partir d'un mélange comportant au moins une poudre inorganique d'au moins un élément de type oxyde ou cermet ou métal ou nitrure ou d'au moins un composé comportant au moins un desdits éléments et au moins un liant.

L'invention concerne le domaine de la métallurgie des poudres pour l'obtention de céramiques, et en particulier le processus de malaxage du mélange de matières premières pour constituer un matériau intermédiaire appelé feedstock destiné à alimenter une presse par injection pour la mise en forme du composant à produire.

### Arrière-plan de l'invention

Dans la fabrication de matériaux durs pour la bijouterie et l'industrie horlogère, ou encore pour des applications techniques telles que le médical, l'électronique, la téléphonie, l'outillage, les plaquettes de coupe d'usinage, l'industrie des biens de consommation, et notamment en ce qui concerne des matériaux durs généralement désignés sous le nom générique de «céramiques» inorganiques, on met en oeuvre des techniques de métallurgie des poudres. On appellera ici « céramique » le matériau de synthèse inorganique obtenu, quelle que soit la nature de ce matériau, saphir, rubis, diamant artificiel, glace saphir, céramique, micro-aimant, métal, alliage, ou autre.

Les matières premières de base sont de différente nature, certaines sont tenues secrètes pour la protection des productions. De façon générale, les matières premières utilisées comportent au moins, d'une part de la poudre de céramique, et d'autre part des liants organiques tels que résines ou matières plastiques ou similaires qui permettent l'injection et la bonne tenue du composant réalisé avec le mélange de l'ensemble des matières premières. D'autres additifs peuvent être incorporés au mélange. On comprend que les matières premières peuvent être de différentes textures: solide, pulvérulente, liquide, ou encore pâteuse. Le mélange peut changer de structure au cours de son élaboration, en particulier, et non limitativement, quand des composants complémentaires d'une résine subissent une réaction de polymérisation.

Le procédé global de fabrication d'un composant céramique inorganique comporte au moins les étapes suivantes :
- préparation des matières premières ;
- mélange(s) des matières premières, ou/et pré-mélange deux à deux (ou plus) si nécessaire ;
- malaxage d'homogénéisation ;
- granulation
- pressage, notamment dans une chambre de moulage, d'une quantité de poudre ou de granulés feedstock issue du malaxage et de la granulation, pour la réalisation d'une ébauche de composant. Ce pressage peut être réalisé par injection, sous pression, notamment dans un injecteur à vis comportant des moyens de mise en température de cette quantité de poudre ou de granulés feedstock issue du malaxage et de la granulation;
- étuvage de déliantage pour la combustion ou/et la dissolution de certains composants du mélange servant de liant traitement thermique de l'ébauche de composant, ou frittage ;
- traitement thermique de l'ébauche en sortie de déliantage, pour le frittage donnant sa cohérence finale au composant fini. Ce traitement thermique entraîne un retrait dimensionnel, qui permet l'obtention d'un composant en cotes finies ;
- traitement de finition d'aspect du composant.

Cet exposé simplifié du procédé cache la complexité réelle de mise au point, qui est propre à chaque composition de mélange de matières premières, et à chaque type de composant fini selon ses caractéristiques physiques, notamment de résistance à l'usure et d'aspect, et selon ses caractéristiques mécaniques et chimiques.

La conduite de chaque étape est délicate, et exige le respect de paramètres précis, sous peine de changements irréversibles de caractéristiques du mélange, de l'ébauche injectée, de l'ébauche déliantée, ou du composant fritté.

Tout particulièrement, l'étape du malaxage d'homogénéisation est cruciale pour la suite du processus. Cette étape de malaxage peut dans certains cas être combinée avec l'étape préalable de mélange des matières premières, qui peut se faire directement dans le poste de fabrication qu'on appelle ici « malaxeur ».

En effet, lors du malaxage se produisent des réactions entre certaines matières premières, et ces réactions modifient immédiatement les conditions physiques dans lesquels se trouve le mélange en cours de malaxage. En particulier, des réactions exothermiques non maîtrisées ni compensées peuvent aboutir à une altération complète du mélange, qui est alors inutilisable pour la fabrication du composant final prévu. Les paramètres de température, de vitesse, et de couple, sont à surveiller étroitement. La répétitivité des caractéristiques physiques obtenues in fine est une condition obligatoire, qui impose une régulation parfaite du malaxage, l'anticipation et le contrôle des réactions qui s'y produisent.

En particulier, quand on malaxe un tel mélange avec des couteaux rotatifs dans un malaxeur, les éléments du mélange montent très vite en température, sous l'effet de la friction, jusqu'à dépasser leur température de fusion et à s'amalgamer sous forme pâteuse. Le problème réside dans le gradient de température extrêmement élevé dans le mélange quand il arrive au voisinage de cette ou ces températures de fusion, avec une valeur de l'ordre de plusieurs °C par seconde, notamment 10°C par seconde. Il est alors très difficile d'appliquer un refroidissement efficace pour prévenir l'emballement et la détérioration du mélange.

Le document EP 2 338 590 A1 au nom de NITTO DENKO CORP, décrit un appareil et un procédé de production de résine, avec un malaxeur à palettes, et selon un arrangement très particulier, relatif à la sortie de matière à l'extrémité inférieure de la cuve, sous la forme d'une portion courbe équipée de moyens d'échange thermique pour gérer par refroidissement la solidification progressive de la résine synthétique fabriquée, avant son concassage. La fusion des matériaux résulte de la seule friction. Ce document est spécifique à de la résine polymérique, et n'est pas prévu pour des mélanges de poudres, et ne peut convenir à la fabrication de feedstock.

Le document EP 0 956 918 A1 au nom de LOEDIGE MASCHINENBAU GmbH décrit un procédé de fabrication d'un produit intermédiaire pour moulage par injection, formé par une poudre métallique ou céramique et un liant organique. Un mélangeur crée un anneau de matière mélangée, pour obtenir une poudre apte à s'écouler, et on effectue un traitement mécanique pour faire fondre le liant organique, sans chauffage autre que l'élévation de température résultant du frottement des matériaux, ce qui entraîne une impossibilité de maîtriser la température finale du mélange ainsi réalisé.

Le document EP 1 344 593 A2 au nom de ADVANCED MATERIALS TECH concerne un procédé de fabrication d'un article en alliage d'aluminium moulé par injection d'un matériau fritté à partir d'un mélange entre au moins 95% en poids de poudre d'aluminium et des oxydes ou additifs, et décrit des paramètres très particuliers à un tel mélange. Il ne décrit pas de moyen de chauffage des matériaux.

Le document US 2004/217 524 A1 au nom de MORRIS ROBERT CRAIG décrit une fabrication de feedstocks en cermet, selon des paramètres particuliers et avec notamment des températures assez basses, sans recourir à un système rotatif, mais à un pré-mélange dans une cuve annexe alimentant une vis d'extrusion.

La description vise encore à proposer un liant pour composition de moulage par injection optimisé facilitant le malaxage en métallurgie des poudres pour l'obtention de céramiques ou de métaux, de façon à obtenir une production de qualité très reproductible, avec un coefficient de retrait maîtrisé.

On connaît déjà, par exemple le brevet US 5145900, des matériaux thermoplastiques (feedstock) pour la fabrication de pièces moulées céramiques qui contiennent une poudre inorganique frittable et un liant organique polymérique, celui-ci étant essentiellement constitué d'un mélange de polyoxyméthylène et de copolymères de polyoxyméthylène et de polyoxolanes.

Ces feedstocks ont révélé toutefois de nombreux inconvénients, comme par exemple une fluidité insuffisante en moulage par injection, et des problèmes de tenue des pièces de formes moulées qui présentent des fissures et du feuilletage, ceci surtout lorsque la forme des pièces est complexe; ils sont en outre responsables de problèmes environnementaux dus à la nécessité d'utiliser des produits agressifs, tels que l'acide nitrique, plus particulièrement pour l'élimination finale de la phase organique. De plus, l'utilisation d'eau dans ce processus d'élimination du liant organique est problématique dans le cas où les feedstocks contiennent des matériaux métalliques qui risquent d'être oxydés.

### Résumé de l'invention

L'invention se propose d'améliorer le malaxage en métallurgie des poudres pour l'obtention de céramiques, de façon à obtenir une production de qualité très reproductible, avec un coefficient de retrait maîtrisé, avec une amplitude de dispersion relative inférieure à 2 pour mille, voire à 1 pour mille.

A cet effet, l'invention concerne un procédé de malaxage de matière première pour métallurgie des poudres, en particulier pour la fabrication de granulés feedstock d'un type de céramique donné à partir d'un mélange comportant au moins une poudre inorganique d'au moins un élément de type oxyde ou cermet ou métal ou nitrure ou d'au moins un composé comportant au moins un desdits éléments et au moins un liant, selon la revendication 1.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée, un système de pilotage d'un malaxeur pour la mise en oeuvre de l'invention ;
- la figure 2 représente, de façon schématisée, partielle (les liaisons avec le système de pilotage n'étant qu'ébauchées) et en coupe passant par l'axe d'un arbre de malaxage, un malaxeur selon une première variante où la cuve du malaxeur comporte un unique circuit d'échange d'énergie avec un circuit de réchauffage unique ;
- la figure 3 représente, de façon similaire à la figure 2, une deuxième variante où la cuve du malaxeur comporte deux circuits d'échange d'énergie, l'un échangeant l'énergie avec le circuit de réchauffage de la figure 2, et l'autre échangeant l'énergie avec un circuit de refroidissement ;
- la figure 4 et la figure 5 représentent, de façon schématisée et en vue de côté, deux exemples d'arbres de malaxages assemblés selon des compositions différentes ;
- la figure 6 représente, de façon schématisée, partielle (les liaisons avec le système de pilotage n'étant pas représentées) et en vue de dessus, un malaxeur selon la première variante de la figure 2 ;
- la figure 7 représente, de façon analogue à la figure 6, un malaxeur selon la deuxième variante de la figure 3 ;
- la figure 8 représente, de façon schématisée, partielle (les liaisons avec le système de pilotage n'étant pas représentées) et en vue de dessus, un tel malaxeur, dont l'arbre de malaxage a été extrait, et remplacé par un ensemble de couteaux et volets mobiles de fractionnement et de concassage d'une galette, en combinaison avec une vis sans fin logée dans une gorge du fond de cuve ;
- la figure 9 représente, sous forme d'un schéma-blocs, une séquence de process de malaxage selon l'invention, dans un tel malaxeur.

### Description détaillée des modes de réalisation préférés

La poudre dite de céramique plus particulièrement mise en oeuvre dans le cadre de l'invention est une poudre inorganique d'au moins un élément de type oxyde ou cermet ou métal ou nitrure ou d'au moins un composé comportant au moins un desdits éléments.

Par exemple, et de façon nullement limitative, cette poudre inorganique comporte du zircone ou de l'alumine, des carbures, des nitrures, ou similaire.

Ces éléments ou ces oxydes sont sélectionnés pour garantir une dureté élevée, une haute résistance à l'usure, une haute résistance aux efforts mécaniques, et une tenue dans le temps exceptionnelle, sans altération.

Les liants organiques utilisés, résines ou matières plastiques ou similaires, permettent d'amener cette poudre inorganique à l'opération de pressage ou/et d'injection, avec une viscosité suffisante pour son écoulement dans un moule, tout en ayant une résistance suffisante pour éviter les déformations.

Le malaxeur selon l'invention, permettant la mise en oeuvre du procédé de malaxage décrit plus loin, est polyvalent, et ces exemples de métallurgie des poudres ne sont pas limitatifs de ses utilisations possibles. Par exemple la mise en oeuvre de « MIM » (metal injection molding) est également possible.

Le malaxage a pour but d'enrober les grains de poudre par le ou les liants, de façon à obtenir une pâte homogène.

Cette pâte homogène devient une masse compacte après refroidissement en sortie du malaxage. Cette masse compacte est ensuite fractionnée par concassage pour l'obtention de granulés appelés feedstock, de composition homogène et de dimensions calibrées, et qui sont prêts à être utilisés en l'état en alimentation d'une presse d'injection par exemple.

Dans une mise en oeuvre particulière, et non limitative, de l'invention, on utilise un malaxeur 1 pour la fabrication de granulés feedstock de type céramique comportant, d'une part au moins une telle poudre inorganique, et d'autre part au moins un liant organique, ce malaxeur 1 comporte au moins une cuve 2. Dans ce malaxeur 1 est mobile au moins un moyen de malaxage 3, plongeant dans une cuve 2 correspondante ou saillant du fond d'une telle cuve 2 tel que représenté sur les figures.

Le malaxeur 1 comporte des moyens d'échange thermique 4, qui peuvent comporter au moins un circuit dans lequel un fluide circule dans une double paroi d'une cuve 2, ou circule dans des serpentins immergés dans une cuve 2, ou autre.

Le malaxeur 1 comporte avantageusement des moyens de pilotage 5 connectés à des moyens de mesure 6 et à des moyens de mémorisation 7 de paramètres de température en fonction du type de matériau à réaliser.

Ces moyens de pilotage 5 sont agencés pour la régulation de température de la cuve 2 et l'échange de chaleur entre la cuve 2 et au moins un milieu externe à la cuve 2, par les moyens d'échange thermique 4.

Dans la version la plus simple, les moyens de pilotage 5 sont à commande manuelle, et comportent des moyens de commande des vitesses de rotation de chaque moyen de malaxage 3, et des températures ou/et débits de chaque circuit d'échange thermique, au vu d'informations affichées par des moyens de mesure 6 tels que sondes de température situées dans la cuve 2, dans chaque circuit d'échange thermique, ou thermomètres plongés dans la pâte, de façon manuelle ou automatisée.

Dans une fabrication plus automatisée, les moyens de pilotage 5 comportent au moins un automate programmable capable d'effectuer ces actions en fonction de programmes de production mémorisés pour chaque type de matériau inorganique dit « céramique » à produire.

Ces moyens de pilotage 5 peuvent, selon le degré d'automatisation de l'installation, contrôler notamment ces moyens d'échange thermique 4, en corrélation avec des valeurs de vitesse d'arbre ou/et de circulation de la masse compacte mesurées, de températures de masse compacte ou/et de cuve mesurées, et avec des valeurs-seuil, en particulier de température, imposées pour la fabrication d'un produit donné. L'ensemble des paramètres relatif à un produit donné, stocké dans les moyens de mémorisation 7, permet avantageusement de piloter l'ensemble de son cycle de fabrication, incluant toutes les temporisations souhaitées.

Selon l'invention, les moyens d'échange thermique 4 comportent des moyens de réchauffement 41 agencés pour le chauffage de la cuve 2 ou/et de son contenu à une température comprise entre une température inférieure TINF à partir de laquelle un mélange correspondant à un type de céramique donné parvient à l'état pâteux, et à une température supérieure TSUP en-dessous de laquelle doit rester le mélange correspondant au type de céramique donné, pour éviter la dégradation des liants.

Cette température inférieure TINF et cette température supérieure TSUP sont mémorisées, pour le mélange correspondant à un type de céramique donné, au niveau des moyens de mémorisation 7. Dans la version manuelle de conduite du malaxeur, les moyens de mémorisation consistent en des fiches récapitulatives de la recette de composition de la charge du malaxeur, avec ses tolérances, comportant les températures limites de chaque phase, et une fourchette de durée de chaque phase.

Ces moyens de réchauffement 41 échangent l'énergie, dans une première connexion, avec un premier circuit 8 d'échange thermique de maintien en température de malaxage, externe à la cuve 2. Et l'inertie thermique du premier circuit 8 est supérieure à celle de la cuve 2 à pleine charge du mélange. De préférence elle lui est supérieure dans un facteur K1 supérieur à 2.

Cette caractéristique d'inertie thermique du circuit réchauffeur est une caractéristique essentielle de l'invention, car elle permet d'obtenir des temps de cycle très courts.

Le fait de chauffer la cuve 2 et son contenu va à l'encontre des préjugés de l'art antérieur. Le chauffage permet d'avoir moins d'écart par rapport à une température moyenne, et de maîtriser complètement le gradient de température. Il n'est plus nécessaire de faire tourner l'arbre de malaxage à grande vitesse pour atteindre les températures de fusion des composants par friction de ceux-ci. La production obtenue est plus homogène, ce qui est capital en métallurgie des poudres, car il s'agit de maîtriser parfaitement le coefficient de retrait lors du frittage, et ce coefficient dépend de la qualité du malaxage. Par exemple pour une fabrication de céramique à base de matières premières minérales telles que de la poudre d'oxyde de zirconium ZrO₂, l'art antérieur permettait d'obtenir pour une production en 5 batchs journaliers de 20 kg chacun, un coefficient de retrait dans la fourchette 1,2850 à 1,2920, tandis que la mise en oeuvre du malaxeur selon l'invention et du procédé de malaxage associé permet, toutes choses égales par ailleurs, de ramener ce coefficient dans la fourchette 1,2875 à 1,2895, voire respectivement dans la fourchette 1,2880 à 1,2890, ce qui est excellent, puisque l'amplitude de la dispersion relative est alors de 1,6 pour mille, respectivement 0,8 pour mille contre 5,4 pour mille dans l'art antérieur, soit une division par un facteur d'environ 3,5, respectivement 7. La production est ainsi très reproductible.

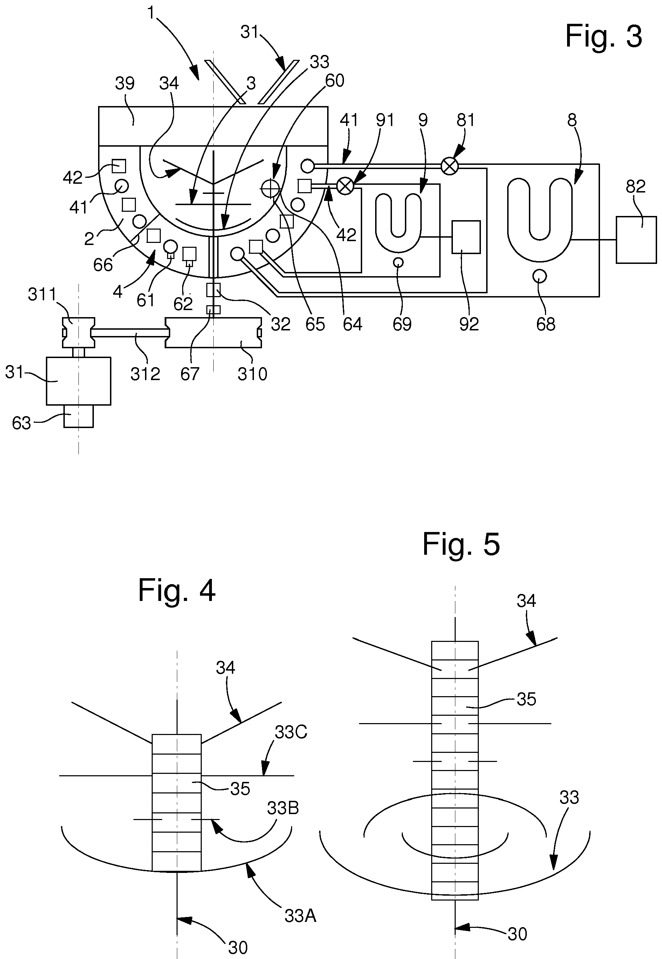

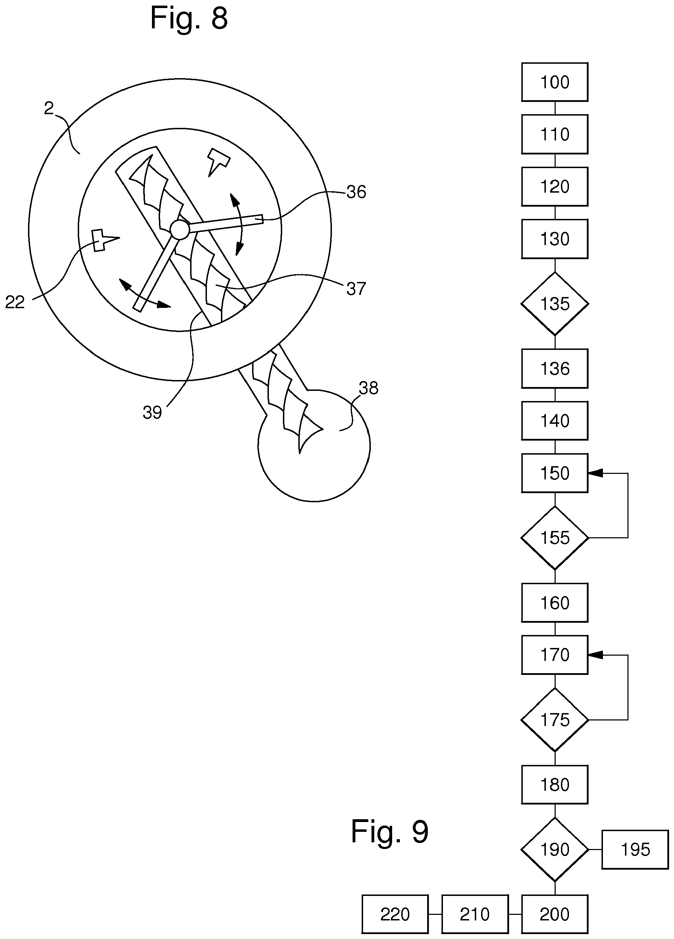

Dans une mise en oeuvre particulière de l'invention, illustré par les figures 3 et 8, les moyens d'échange thermique 4 comportent des moyens de refroidissement 42 pour le refroidissement de la cuve 2 ou/et de son contenu. Les moyens de refroidissement 42 sont alors distincts des moyens de réchauffement 41, tel que visible sur les figures 3 et 8. Dans cette variante, les moyens de refroidissement 42 échangent l'énergie, dans une deuxième connexion, avec un deuxième circuit 9 à température ambiante, externe à la cuve 2, et dont l'inertie thermique est très supérieure à celle de la cuve 2 à pleine charge du mélange, et de préférence supérieure dans un deuxième facteur K2 supérieur à 2. De la même façon que pour le circuit réchauffeur, cette caractéristique d'inertie thermique du circuit refroidisseur éventuel est une caractéristique importante de l'invention, car elle permet d'obtenir des temps de cycle très courts.

L'utilisation particulière d'un circuit réchauffeur et d'un circuit refroidisseur, chacun d'inertie thermique très supérieure à celle de la cuve et de son contenu, permet, d'une part la maîtrise des temps de cycle qui peuvent être réduits de façon très importante par rapport aux techniques anciennes, et d'autre part la maîtrise du gradient thermique : la stabilisation de température assurée par l'échange calorifique avec un circuit externe permet d'éviter les gradients impossibles à maîtriser de l'art antérieur basé sur l'utilisation de la friction pour la fusion des liants, qui étaient couramment supérieurs à 10°C par seconde, voire davantage.

L'invention permet la maîtrise du produit à haute température.

L'invention garantit, de plus, la maîtrise des retraits, en raison de l'absence de toute dégradation des ingrédients. Ce problème de dégradation est complexe, en raison de la diversité des températures de fusion des liants usuels, depuis 50°C pour des cires, jusqu'à 165°C pour des polymères ou similaires. Il faut bien comprendre que, très près du point de fusion, se situe le point de dégradation et de perte de propriétés de nombreux ingrédients. Ainsi une paraffine, en fusion vers 50°C, est complètement dégradée vers 185°C, soit seulement 20°C au-delà du point de fusion du dernier polymère fondu, ce qui est évidemment impossible à maîtriser avec un gradient de l'ordre de 10°C par seconde. Le même phénomène concerne les composés acryliques. Cette maîtrise à haute température (c'est-à-dire, pour les feedstocks de type céramique auxquels est plus précisément dédiée l'invention, entre 150°C et 200°C) est donc fondamentale pour l'obtention, de façon reproductible, d'un produit de qualité.

Dans une mise en oeuvre particulière de l'invention, les moyens de pilotage 5 pilotent les moyens d'échange thermique 4 de façon à activer l'échange thermique avec la cuve 2, à un instant donné, des seuls moyens de refroidissement 42 ou des seuls moyens de réchauffement 41.

L'utilisation d'un circuit unique d'échange thermique au niveau de la cuve, alternativement mis en situation d'échange thermique avec une source chaude ou avec une source froide, permet d'atteindre la courbe de température souhaitée. La deuxième variante avec deux circuits distincts, sur l'un lesquels on peut raccorder la cuve de façon instantanée, permet de surmonter les effets de l'inertie thermique propre à la cuve 2, par sa mise en communication instantanée avec un circuit d'inertie thermique très supérieure à la sienne, permettant de la stabiliser très rapidement dans une fourchette de températures compatible avec la bonne conduite du process, et ainsi de réduire sensiblement le temps de cycle global.

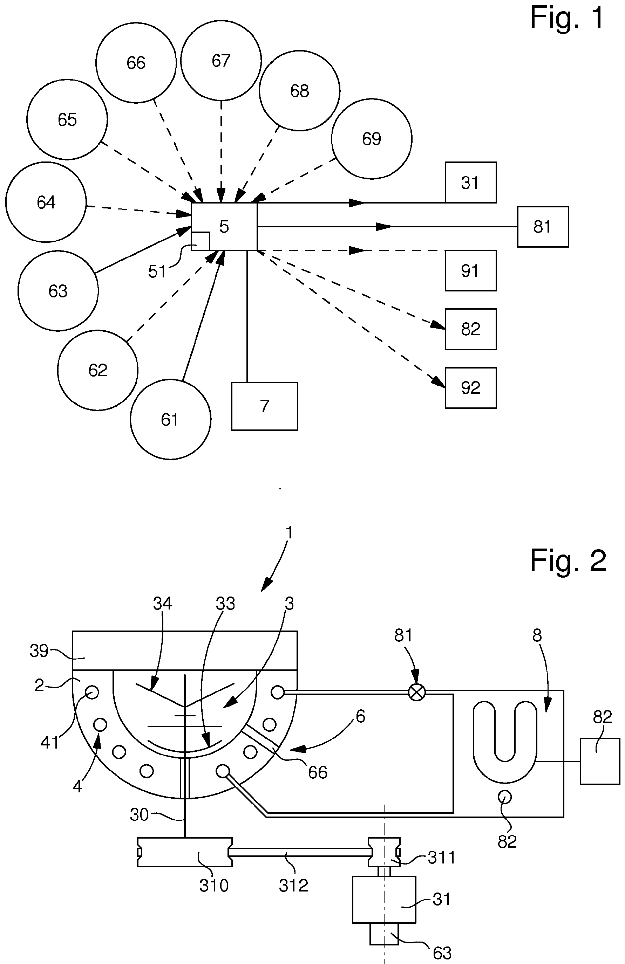

Le moyen de malaxage 3 comporte de préférence, et non limitativement, un arbre 30 en rotation porteur de pales 33 ou/et de couteaux dans la cuve 2. Chaque arbre de malaxage 30 est de préférence entraîné, via une courroie ou similaire, par un moteur 31 équipé d'un variateur continu relié à des moyens de pilotage 5 qui commandent ce variateur. L'arbre 30 est de préférence équipé d'une dynamo tachymétrique 63 qui communique la vitesse réelle de rotation de l'arbre 30 aux moyens de pilotage 5. La figure 2 montre un arbre de malaxage 30 en porte-à-faux et entraîné sous le fond de la cuve 2, qu'il traverse, cet arbre 30 est équipé d'une poulie 310 de diamètre supérieur à celui de la poulie moteur 311, jointes par une courroie 312 ou similaire, de façon à obtenir plus de couple, dans la mesure où l'on a moins besoin d'atteindre des vitesses de rotation élevées que dans l'art antérieur.

Les figures 1 à 3 illustrent l'action des moyens de pilotage 5, sur la base d'au moins une information de vitesse du moyen de malaxage 3 ou d'une masse de produit en cours de transformation par le malaxeur 1, et d'au moins une information de température de la cuve 2 ou de cette masse de produit, relevées par des capteurs que comportent les moyens de mesure 6, pour commander la vitesse du moteur 31 entraînant directement ou indirectement l'arbre de malaxage 30, et un débit d'échange thermique, notamment par une première pompe 81 sur le premier circuit 8 des moyens de réchauffement 41.

Quand, de façon particulière dans la deuxième variante, les moyens de refroidissement 42 échangent l'énergie, dans une deuxième connexion, avec un deuxième circuit 9, les moyens de pilotage 5 agissent aussi sur une deuxième pompe 91 sur le deuxième circuit 9 des moyens de refroidissement 42.

Les moyens de pilotage 5 comportent une horloge 51, permettant de respecter les paramètres du process introduits dans les moyens de mémorisation 7.

Les moyens de mesure 6 peuvent, en particulier et non limitativement, comprendre tout ou partie des capteurs suivants :
- un capteur de température 61 dans le premier circuit 8 des moyens de réchauffement 41, de préférence dans la cuve 2 ou le plus près possible de la cuve. Dans le cas de la première variante qui ne comporte que des moyens de réchauffement 41, un capteur est de préférence disposé en sortie de ce système de réchauffage ; un autre capteur est disposé en entrée du même circuit;
- dans le cas de la deuxième variante, un capteur de température 62 dans le deuxième circuit 9 des moyens de refroidissement 42, de préférence dans la cuve 2 ou le plus près possible de la cuve ;
- une dynamo tachymétrique 63 pour la mesure de la vitesse de rotation de l'arbre de malaxage 30 ;
- un capteur de mouvement 64 caractérisant le mouvement de pâte dans la cuve, notamment un capteur de vitesse de rotation d'une vis sans fin ou d'une roue dentée montée libre sur un axe en fond de cuve, ou similaire ;
- un capteur de température 65 au coeur du mélange ou de la pâte, notamment couplé avec le capteur de mouvement 64 précédent ;
- au moins un (de préférence deux) capteur de température 66 sur une surface intérieure de la cuve 2, de préférence à fleur de la surface intérieure de la cuve 2, de préférence au voisinage du fond de cuve ;
- un capteur de température 67 de l'arbre de malaxage 30, de préférence vers l'extrémité de celui-ci au voisinage du fond de la cuve 2 ;
- un capteur de température 68 dans un gros réservoir du premier circuit 8 d'échange ;
- un capteur de température 69 dans un gros réservoir du deuxième circuit 9 d'échange.

Les moyens de pilotage 5 peuvent, encore, agir sur un premier régulateur 82 effectuant un apport (ou un enlèvement) de chaleur au premier circuit 8, ou/et agir sur un deuxième régulateur 92 effectuant un enlèvement (ou un apport) de chaleur au deuxième circuit 8, ces premier 82 et deuxième 92 régulateurs pouvant comporter une résistance ou/et un groupe froid. De préférence, le premier circuit 8 véhicule de l'huile, tandis que le deuxième circuit 9 véhicule de l'eau glycolée, ou similaire.

Dans une variante particulière, le malaxeur 1 comporte une pluralité de cuves 2 ainsi équipées, communiquant entre elles depuis une cuve d'amont où sont déversées les matières premières par une alimentation 21 telle qu'une trémie ou similaire, jusqu'à une cuve d'aval servant notamment au concassage final de la masse compacte malaxée. Cette cuve d'aval peut avoir une double fonction de cuve de malaxage et de cuve de concassage : les matières premières en mélange y sont déversées par la cuve d'amont, au moins un arbre de malaxage effectue le malaxage proprement dit avec des pales ou/et couteaux de forme adaptée au retournement d'une masse pâteuse dans la cuve de malaxage et à sa séparation par tranchage, le concassage final pouvant être effectué, selon le cas, par un tel arbre de malaxage 30, ou par au moins un arbre de concassage muni de couteaux 22 plus précisément adaptés à la fragmentation d'une masse compacte solidifiée. Si nécessaire un concasseur d'appoint peut être utilisé en aval pour atteindre la granulométrie souhaitée.

Les figures illustrent le cas non limitatif d'une cuve 2 unique, dans laquelle est conduit tout le processus de malaxage, depuis l'introduction des matières premières, jusqu'au concassage de la masse malaxée refroidie appelée galette, pour l'obtention de granulés feedstock ou bien d'une fine farine.

Plus particulièrement, tel que représenté sur la figure 2, l'arbre 30 est vertical, et comporte notamment des pales 33, de préférence réparties selon plusieurs plans parallèles.

L'étagement des pales ou/et couteaux est de préférence réglable, de façon à être efficace aussi bien pour des petites charges que pour des grosses : ou bien l'arbre de malaxage 30 entier est interchangeable, au niveau d'un accouplement 32, ou bien il comporte une succession de douilles porteuses de pales ou couteaux, en appui les unes sur les autres et enfilées sur un arbre commun, et séparées si nécessaire par des entretoises 35 pour obtenir une configuration particulière, tel que visible sur les figures 3 et 4, où l'arbre 30 est ainsi équipé de trois ensembles de pales inférieures 33A, 33B, 33C, surmontées de pales supérieures 34. Si la disposition par niveaux sensiblement plans des pales ou couteaux est la plus courante, on peut aussi utiliser, surtout pour le niveau supérieur adapté aux grosses charges, des pales 34 ou couteaux inscrits dans une enveloppe sensiblement conique par rapport à l'axe de l'arbre. Par pales on entend des ailettes sensiblement radiales ayant une forme permettant de donner un mouvement particulier, au mélange de matières premières d'abord, et à la pâte ensuite. Par couteaux on entend des ailettes de forme similaire et de section plus fine, et comportant un bord d'attaque affûté, notamment pour trancher la masse pâteuse tout en l'entraînant en mouvement ; toutefois un bord affûté peut se révéler contre-productif, car plus sensible à l'usure qu'une pale d'entraînement de la pâte, cette usure générant une pollution altérant la précision de la composition des feedstock obtenus, de ce fait l'affûtage éventuel nécessite une surveillance plus poussée de la production. Avantageusement, les pales ou couteaux dits inférieurs, les plus proches du fond de cuve adoptent une forme voisine de celui-ci, ou bien s'inscrivent dans une surface conique, torique, ou sphérique, et exercent une fonction de raclage de la pâte dans le fond de cuve.

Les pales et couteaux sont de préférence décalés angulairement d'un étage à l'autre, les différents étages pouvant comporter des nombres de pales ou couteaux différents avec une disposition angulaire variable, en particulier pour prévenir tout phénomène de résonance et de bruit.

Dans le cas de pales simples à deux bras, deux étages adjacents sont décalés angulairement d'environ 90°.

De façon connue, les pales 33 ou/et couteaux ont de préférence une légère incidence par rapport au plan perpendiculaire à l'axe de l'arbre 30. Cette incidence peut être réglée, soit très simplement par échange d'un étage de coupe monté sur une douille telle que présentée ci-dessus, soit dans de plus grosses installations avec un mécanisme de renvoi qui toutefois est plus sensible à l'usure générée par le mouvement de la pâte. Selon le cas, l'incidence peut être ajustée, en fonction du sens de rotation de l'arbre, soit pour pousser la masse compacte au fond de la cuve, soit au contraire pour tendre à la décoller : une réalisation mixte consomme certes plus de puissance, mais un étage supérieur tendant à décoller la pâte du fond de cuve facilite son amalgame, tandis qu'un étage de coupe inférieur tendant à rabattre la pâte vers le fond de cuve est avantageux en particulier dans les étapes finales du process et dans le fractionnement de la galette obtenue après refroidissement de la masse compacte pâteuse.

Le concassage de la galette peut également être effectué, après un dégagement vertical de l'arbre de malaxage 30, par l'action conjuguée d'une vis sans fin 37 noyée dans une gorge 39 en fond de cuve 2, et de volets 36 articulés sur un axe vertical, l'extraction des granulés feedstock concassés se faisant par inversion de sens de la vis sans fin et le convoyage vers une station de desserte 38.

Dans une autre variante, le concassage est mené jusqu'à l'obtention d'une farine. Cette farine est transformée en aval, dans une station annexe de granulation où elle est d'abord comprimée pour former un boudin extrudé, découpé en pellets au fur et à mesure de son avance.

Chaque cuve 2 est de préférence dotée d'un moyen de fermeture comportant au moins une soupape ou un orifice d'évacuation de surpression.

L'échange de température, au niveau de la cuve dans laquelle est effectué le malaxage, permet :
- par une élévation de température, un ramollissement de certains liants, sous une température seuil maximale de ramollissement la plus élevée ;
- une très bonne homogénéisation de la pâte, avec une dispersion de température au coeur de la pâte de l'ordre de +/- 2 à 3°C ;
- par le maintien à une température maintenue constante d'un premier circuit 8 d'échange thermique de maintien en température de malaxage, dont l'inertie thermique est très supérieure à celle de la cuve à pleine charge, de maîtriser le gradient thermique de la masse compacte dans la cuve à une valeur inférieure à 3°C par minute lors de la friction des composants du mélange, à comparer avec un gradient de l'ordre de 10°C par seconde dans des malaxeurs de l'art antérieur seulement munis de moyens de refroidissement, cette faible valeur de gradient obtenue par la mise en oeuvre de l'invention autorisant un malaxage à vitesse moindre ;
- par une diminution de température, le maintien de la température de la pâte sous un seuil limite maximal propre au mélange défini pour prévenir toute altération de ses propriétés, et en particulier lorsque des réactions exothermiques se produisent entre certains constituants du liant, ou/et lorsque la vitesse de malaxage est trop importante, ou/et lorsque les frottements dans le mélange ou avec les pales/couteaux ou avec la cuve sont trop importants ;
- par une diminution rapide de température consécutive au débrayage du circuit d'échange thermique de maintien en température de malaxage, le refroidissement de la masse compacte préalablement malaxée pour sa solidification ; cette diminution rapide de température peut être obtenue par la connexion du moyen d'échange thermique 4 à un deuxième circuit 9 à température ambiante, dont l'inertie thermique est très supérieure à celle de la cuve à pleine charge.

La régulation de vitesse de rotation d'au moins un arbre de malaxage permet :
- par une diminution de vitesse, l'abaissement des frottements décrits ci-dessus ;
- par une diminution de vitesse en phase finale, une prise progressive de la masse compacte jusqu'à sa solidification sous forme d'une galette ;
- par une augmentation de vitesse, l'amélioration de l'agglomération des composants du liant autour des grains de poudre inorganique d'au moins un élément de type oxyde ou cermet ou métal ou nitrure ou d'au moins un composé comportant au moins un desdits éléments ;
- par une augmentation de vitesse, la fragmentation sous forme de granulés feedstock de la masse compacte préalablement solidifiée sous forme de galette.

La conduite, en fonction du temps, des moyens d'échange de température et de la vitesse de malaxage conditionne donc la qualité du produit final, en même temps que les paramètres propres au produit intermédiaire, notamment sa viscosité. La bonne gestion de cette conduite conditionne naturellement le temps de cycle dans le malaxeur, et donc le coût de production et l'amortissement de l'installation.

De façon générale, on s'efforce de maintenir à la fois la température et la vitesse de malaxage sous des valeurs seuil propres à chaque mélange.

Le malaxeur 1 peut, encore, être équipé de moyens de mesure de la vitesse de circulation de la masse compacte dans la cuve, par exemple au niveau d'un mobile 60 tel qu'une vis sans fin ou une roue folle immergée dans la masse à l'intérieur de la cuve, dont on mesure la vitesse de rotation par un capteur de mouvement de pâte 64, et, avantageusement, la température à coeur de la masse compacte pâteuse par un capteur de température de pâte 65.

Des moyens de mesure de température de la masse compacte peuvent être situés, ou au niveau d'un tel mobile 60, ou/et en fond de cuve 2 par un capteur de température 66 sur une surface intérieure de la cuve 2, ou/et en périphérie de l'arbre de malaxage 30, par un capteur de température 67 de préférence à sa partie inférieure au voisinage du fond de la cuve 2.

L'invention concerne encore un liant particulier pour composition de moulage par injection comprenant :
- au moins 35% en volume d'une base polymérique,
- de 40 à 55 % en volume d'un mélange de cires,
- et environ 10% en volume d'un surfactant,
dans lequel la base polymérique contient des copolymères d'éthylène et d'acide méthacrylique ou acrylique, ou des copolymères d'éthylène et d'acétate de vinyle, ou des copolymères d'éthylène comprenant un anhydride maléique ou un mélange de ces copolymères, ainsi que du polyéthylène, du polypropylène et une résine acrylique.

De préférence, le liant de l'invention comprend de 2 à 7 % en volume d'un desdits copolymères ou de leurs mélanges, environ 25 % en volume de polyéthylène, de 2 à 15 % en volume de polypropylène et de 6 à 15% en volume de résine acrylique.

Selon un mode de réalisation préféré, le copolymère d'éthylène et d'acide méthacrylique ou acrylique contient de 3 à 10 % en poids de comonomère méthacrylique ou acrylique, le copolymère d'éthylène et d'acétate de vinyle contient de 7 à 18 % en poids de comonomère acétate de vinyle, et le copolymère d'éthylène et d'anhydride est un copolymère statistique (*random*) d'éthylène et d'anhydride maléique ayant un point de fusion de 100 à 110 °C ou un copolymère de polyéthylène HD et d'un anhydride modifié ayant une point de fusion de 130 à 134°C.

De préférence, la résine acrylique présente un poids moléculaire compris entre 50000 et 220000 et une viscosité de 0,21 à 0,83, et est choisie parmi le groupe comprenant les polymères méthacrylate d'isobutyle, de méthyle, d'éthyle et de N-butyle, et les copolymères méthacrylates d'isobutyle et de N-butyle et méthacrylates de méthyle et de N-butyle ou un mélanges de ces polymères et/ou copolymères.

De manière avantageuse, la cire est une cire de Carnauba ou une cire de paraffine, ou une huile de palme, ou un mélange de ces éléments.

Selon une autre caractéristique préférée, le surfactant est un NN'-éthylène-bis(stéaramide) ou un mélange d'acides stéarique et palmitique (stéarine), ou un mélange de ces éléments.

L'invention a également pour objet une composition de moulage par injection (feedstock) destinée à la fabrication de pièces de forme métalliques ou céramiques comprenant 76 à 96 % en poids d'une poudre inorganique et 4 à 24 % en poids de liant comprenant :
- au moins 35% en volume d'une base polymérique,
- de 40 à 55 % en volume d'un mélange de cires,
- et environ 10% en volume d'un surfactant,
dans lequel la base polymérique contient des copolymères d'éthylène et d'acide méthacrylique ou acrylique, ou des copolymères d'éthylène et d'acétate de vinyle, ou des copolymères d'éthylène comprenant un anhydride maléique ou un mélange de ces copolymères, ainsi que du polyéthylène, du polypropylène et une résine acrylique.

Selon une caractéristique particulière, la poudre inorganique de la composition de moulage par injection peut être choisie parmi l'ensemble comprenant une poudre d'oxyde, de nitrure, de carbure, de métal, ou un mélange de ces dites poudres et de préférence la poudre inorganique est choisie parmi l'ensemble comprenant une poudre d'alumine, une poudre d'oxyde de zirconium, une poudre de carbure de chrome, une poudre de carbure de titane ou une poudre de carbure de tungstène, une poudre de tungstène métallique ou de nitrure de silicium, une poudre d'acier inoxydable, une poudre de titane métallique ou une mélanges de ces poudres.

Selon des modes de réalisation préférés de la composition de moulage par injection, cette dernière contient en % poids :
- 76 à 88 % d'alumine et 12 à 24% de liant selon l'invention tel que défini plus haut, ou
- 76 à 88% d'alumine et 0.1 à 0.6% d'oxyde de magnésium et 12 à 24% de liant de l'invention, ou
- 58 à 86.5% d'oxyde zirconium et 3.9 à 4.6% d'oxyde d'yttrium et 0.18 à 18.5% d'alumine et 9 à 22% de liant de l'invention, ou
- 61.5 à 84% d'oxyde de zirconium et 3.9 à 4.6% d'oxyde d'yttrium et 0.2 à 9% d'alumine et 2 à 5.5% de pigments inorganique d'une liste comprenant de l'oxyde de fer, de l'oxyde de cobalt, de l'oxyde de chrome, de l'oxyde de titane, de l'oxyde de manganèse, de l'oxyde de zinc ou d'un mélange des dits oxydes et de 9 à 22% de liant de l'invention, ou
- de 88 à 91 % de carbure de chrome ou de titane, et de 9 à 12% de liant de l'invention, ou
- de 93 à 96 % de carbure de tungstène ou de tungstène métallique et de 4 à 7% de liant de l'invention, ou
- de 78 à 85% de nitrure de silicium et de 15 à 22% de liant de l'invention.

La présente invention sera maintenant illustrée plus en détail par les exemples non limitatifs qui suivent :

### Exemple 1 (comparatif):

On mélange la partie polymérique du liant à une poudre d'oxyde zirconium noir (de type St. Gobain Zir Black) à une température d'environ 150°C pour former un prémix. A ce prémix sont ajoutés les cires et le surfactant, et la température est à nouveau augmentée jusqu'à environ 180 °C pour former une sorte de pâte homogène, laquelle est alors refroidie puis granulée jusqu'à solidification, puis conservée pour constituer le feedstock utilisable dans la fabrication d'une pièce de forme par injection selon une technique connue.

Dans cet exemple 1, on a utilisé plus particulièrement 17,2 kg de la poudre de zircone (86 % en poids) et 2,8 kg du liant (env. 14% en poids) ayant la composition volumique suivante:
- 24 % de polyéthylène HD
- 10 % de polypropylène
- 4 % de copolymère d'éthylène et d'acide méthacrylique (à 6,5 % en poids d'acide méthacrylique, par exemple du type "Nucrel (TM)" de DuPont)
- 10 % d'une résine polymère méthacrylate d'iso-butyle ayant un poids moléculaire de 195'000 (par exemple du type "Elvacite (TM) 2045" de Lucite International)
- 1 % d'une résine copolymère méthacrylate d'isobutyle et N-butyle ayant un poids moléculaire de 165'000 (par exemple du type "Elvacite (TM) 2046" de Lucite International)
- 11 % de cire Carnauba
- 31 % d'une cire de paraffine (par exemple du type "Carisma 54 T (TM)" de Alpha Wax BV)
- 6% de bis-stéaramide de N, N'-éthylène
- 3 % d'un mélange d'acides stéarique et palmitique (par exemple du type Stéarine Dubois).

### Exemple 2 (comparatif):

Le même type de feedstock que dans l'exemple 1 ci-dessus est préparé en remplaçant l'oxyde de zirconium noir par de l'oxyde de zirconium blanc, et en utilisant des valeurs légèrement différentes des divers composants du liant, plus particulièrement:
- 26 % du polyéthylène HD
- 10% de polypropylène
- 4% de copolymère d'éthylène et d'acide méthacrylique
- 11 % de la résine "Elvacite 2045"
- 1% de résine "Elvacite 2046"
- 11% de cire de Carnauba
- 29 % de la cire de paraffine
- 8 % de la bis-stéaramide de N, N'-éthylène.

### Exemple 3 :

Toujours avec les mêmes composants du liant organique, avec des proportions volumiques légèrement différentes, d'autres feedstocks peuvent être préparés avec divers poudres céramiques ou métalliques, plus particulièrement de l'alumine, avec indice de retrait de 1,19 ou 1,30 (translucide), du carbure de chrome ou du carbure de titane, du carbure de tungstène (de différentes qualités) et du tungstène métallique, selon le tableau suivant. Le premier exemple dans le tableau est comparatif.

| Liant (% vol.) | Al₂O₃ | Al₂O₃ (transl.) | CrC (90% pds) | CW | W |
|---|---|---|---|---|---|
| | (85-6% pds) | (78-9% pds) | TiC (89% pds) | (94-94,5% pds) | (94-5% pds) |
| Polyéthylène HD | 26 | 28 | 24 | 25/25 | 26/25 |
| Polypropylène | 6 | 2 | 6 | 8/8 | 10/10 |
| Copolymère ("Nucrel") | 3,5 | 3 | 3 | 4/4 | 4/4 |
| Résine "Elvacite 2045" | 6 | 5 | 5 | 7/7 | 9/7 |
| Résine "Elvacite 2046" | 1 | 1 | 1 | 1/1 | 1/1 |
| Cire de Carnauba | 12 | 12 | 12 | 11/11 | 11/11 |
| Cire de paraffine | 35 | 39 | 39 | 34/37 | 29/32 |
| Bix-stéréamide de NN'-éthylène | 5,5 | 5 | 5 | 5/5 | 5/5 |
| Stéarine (Dubois) | 5 | 5 | 5 | 5/2 | 5/5 |

Le procédé de malaxage de matière première pour métallurgie des poudres, selon l'invention, en particulier pour la fabrication de granulés feedstock d'un type de céramique donné à partir d'un mélange comportant, d'une part au moins une poudre inorganique d'au moins un élément de type oxyde ou cermet ou métal ou nitrure ou d'au moins un composé comportant au moins un desdits éléments, et d'autre part au moins un liant organique, se déroule en comportant au moins les étapes suivantes :
- on introduit le mélange dans la cuve 2 d'un malaxeur 1 comportant au moins un moyen de malaxage 3 ;
- on stabilise en température, par connexion de moyens d'échange thermique 4 à un premier circuit 8 d'échange thermique de maintien en température de malaxage, la cuve 2 et son contenu au voisinage d'une température de malaxage comprise entre une température inférieure TINF propre au mélange considéré et à partir de laquelle le mélange parvient à l'état pâteux, et à une température supérieure TSUP propre au mélange considéré et en-dessous de laquelle doit rester le mélange, de façon à éviter la dégradation des liants ;
- on met en mouvement à vitesse inférieure ou égale à 700 tours par minute le moyen de malaxage 3 ;
- on effectue le malaxage du mélange jusqu'à l'obtention d'une masse compacte homogène ;
- on arrête la stabilisation à température élevée, supérieure ou égale à une température T5 propre au mélange considéré et caractéristique d'une masse compacte homogène, de la cuve 2 et de son contenu, dont on autorise la descente en température.

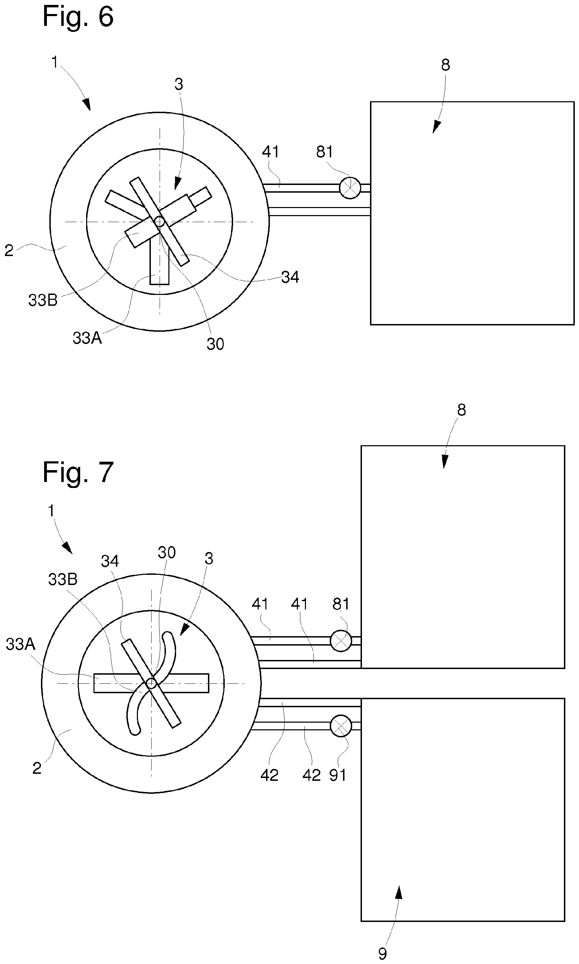

Dans la variante des figures 2 et 6, les moyens d'échange thermique 4 comportent un unique circuit de réchauffage, qui comporte des moyens de réchauffement 41 et qui est relié à un premier circuit 8 d'échange thermique de maintien en température de malaxage. Les moyens de réchauffement 41 comportent par exemple au moins un thermo-régulateur de type « HB Therm » ou similaire, à huile, contrôlé en température, sous une pression maximale de 5 bars, qui permet une conduite en température avec un gradient positif, ou avec un gradient négatif. La descente en température de la cuve 2 et de son contenu peut alors être pilotée par ce thermo-régulateur.

Dans une mise en oeuvre particulière de l'invention, quand on arrête la stabilisation à température élevée, supérieure ou égale à une température propre au mélange considéré et caractéristique d'une masse compacte homogène, de la cuve 2 et de son contenu, on effectue la descente en température de la cuve 2 et de son contenu, soit de façon naturelle, soit par conduite des moyens d'échange thermique à un deuxième circuit à température ambiante voisine de 20°C.

En particulier, quand le malaxeur 1 est équipé d'un deuxième circuit de refroidissement 9, on peut connecter, pour effectuer la descente en température, les moyens d'échange thermique 4 à ce deuxième circuit 9 qui est à une température ambiante voisine de 20 °C.

La cuve 2 est de préférence équipée d'un couvercle 39 étanche pour interdire toute pollution du mélange, et garantir le respect des proportions des différents composants du mélange.

Dans une mise en oeuvre particulière de l'invention, pendant ou après ladite descente en température, on concasse la masse compacte, ou bien dans la cuve 2 à une température inférieure à 100°C et à vitesse supérieure ou égale à 700 tours par minute du moyen de malaxage 3, ou bien dans une station de concassage annexe au malaxeur 1.

Pour la mise en oeuvre de cette dernière alternative comportant une rotation à vitesse élevée, la cuve 2 est avantageusement revêtue intérieurement d'un revêtement anti-usure, de type diamant, ou vitrification, ou similaire.

Une séquence particulière d'utilisation du malaxeur 1 est présentée ci-après, pour un exemple de lots de production d'une masse de 5 kg environ (soit un volume d'environ 10 litres) de céramique à base d'oxyde de zirconium, avec les étapes suivantes, qui précisent notamment ce qu'on entend par vitesse lente, vitesse élevée, température élevée :
- étape 100 : chargement, soit directement dans la cuve 2, soit au niveau d'une alimentation 21, d'une première partie d'une charge de poudre et de structurants, notamment comportant de la poudre et des plastiques polymères, lancement du régulateur de température de cuve à la température maximale T0 comprise entre 125°C et 180°C, et de préférence proche de 125°C, par activation des moyens de réchauffement 41 et désactivation des moyens de refroidissement 42, démarrage de rotation de l'arbre de malaxage 30 à V0 comprise entre 150 et 300 tours par minute ;
- étape 110 : après l'atteinte d'une température de T1 =145°C à 150°C et d'une vitesse de rotation de V1=300 tours par minute, chargement d'une deuxième partie constituant le reste de la charge de liants, notamment comportant des bases de cire ;
- Dans une variante, on effectue cette étape 110 à une vitesse V1 comprise entre 300 et 700 tours par minute ; dans une autre variante, dans une étape 115, on relance, après chargement de cette deuxième partie de la charge, la vitesse de rotation à environ 700 tours par minute.
- étape 120 : après l'atteinte d'une température de T2=160°C, arrêt de la rotation de l'arbre 30, ouverture de la cuve 2, inspection, raclage des parois et pales/couteaux si nécessaire (cette phase d'inspection peut être assistée par une caméra, toutefois la protection contre la pollution est difficile, le meilleur contrôle d'encrassement de la cuve 2 et des pales 33 et 34 peut être effectué par mesure du couple ou de la puissance absorbée au niveau du moteur 31, en référence à des valeurs de consigne d'une production de référence mémorisée dans les moyens de mémorisation 7) ;
- étape 130: remise en rotation, après l'atteinte d'une température de T3=168°C et d'une vitesse de rotation de V3=700 tours par minute, arrêt de la rotation de l'arbre 30, ouverture de la cuve, inspection étape 135, raclage des parois et pales/couteaux selon une étape 136 si nécessaire ;
- étape 140: remise en rotation, après l'atteinte d'une température de TINF=T4=170°C et d'une vitesse de rotation de V4=700 tours par minute, malaxage pendant une durée D4 pré-définie ;
- étape 150 : mesure de la température de la masse compacte, qui doit être comprise entre T5 comprise entre 178°C et 185°C, notamment voisine de 180°C et TSUP=T6=190°C (test étape 155), poursuite du malaxage jusqu'à l'atteinte de cette fourchette de températures ;
- étape 160 : arrêt de la rotation de l'arbre 30, refroidissement par désactivation des moyens de réchauffement 41 et activation des moyens de refroidissement 42 ;
- étape 170 : après l'atteinte d'une température comprise entre T7=150°C et T8=180°C (test étape 175), et de préférence inférieure ou égale à 160°C, mise en rotation de la masse compacte pour débloquer les pales/couteaux et/ou améliorer le cisaillement ; il convient de veiller à l'inertie thermique qui peut introduire un différentiel important, de l'ordre de 20°C, entre une température affichée par un capteur sur la cuve, et la température de la masse malaxée, qui est supérieure. La durée qui s'écoule entre les phases 160 et 170 peut être grande par rapport au temps de cycle complet, et notamment être de l'ordre de 10 minutes ;
- étape 180 : rotations ponctuelles à V9 comprise entre 300 et 700 tours par minute pour constituer une galette, de préférence proche de 700 tours par minute, et refroidissement à une température comprise entre T9=95°C et T10=110°C. Ce refroidissement est effectué, ou bien par passage en mode refroidissement du système de régulation de température dans la première variante, avec un gradient négatif de l'ordre de -2°C par minute, ou bien dans la deuxième variante par désactivation des moyens de réchauffement 41 et activation des moyens de refroidissement 42.
- étape 190 : vérification de l'absence de pollution, et arrêt de toute rotation en cas de pollution et alors étape 195 : finition manuelle de la découpe de la galette.

Dans une variante, avec des lots de production d'une masse de 10 kg environ (soit un volume d'environ 20 litres) de céramique à base d'oxyde de zirconium, les paramètres évoluent, pour un rendement optimal :
- étape 100, température T0 de préférence voisine de 180°C, et vitesse V0 de l'ordre de 150 à 189 tours par minute ;
- étapes 110 et 115 avec vitesse V1 inférieure à 350 tours par minute, de préférence inférieure à 300 tours par minute ;
- étape 130, vitesse V3 de l'ordre de 300 tours par minute ;
- étape 140 : vitesse V4 de l'ordre de 300 à 350 tours par minute ;
- étape 180 : vitesse V9 proche de 300 tours par minute.

Les étapes qui suivent dépendent de l'équipement du malaxeur 1 en moyens de découpe de galette, de concassage, et en moyens de protection de la cuve 2 contre l'abrasion.

En l'absence de moyens particuliers, on extrait manuellement des blocs découpés dans la galette, et on effectue le concassage dans un moyen annexe.

Avec une cuve 2 équipée d'un revêtement interne contre l'abrasion, on peut effectuer les étapes suivantes directement dans la cuve du malaxeur.
- étape 200 : concassage à V11 supérieure à 700 tours par minute, notamment supérieure à 1000 tours par minute. Cette vitesse n'est guère limitée que par le matériel, et peut notamment atteindre 10000 tours par minute;
- étape 210 : arrêt de la rotation de l'arbre 30 ;
- étape 220 : évacuation à moins de V12=2000 tours par minute et à moins de T12=85°C. la vitesse supérieure à 100 tours par minute conduit en général à un farinage du produit sous forme de poudre, lequel produit est alors facile à retravailler, notamment avec une évacuation ou une extrusion par vis, pour son conditionnement en pellets ou similaire, notamment par tranchage d'un boudin formé par compression de cette poudre dans une vis.
- De façon avantageuse, on forme alors, en sortie de l'extrudeuse ou de l'appareil découpant les pellets, des granulés de tailles différentes entre eux, dont les volumes différents sont avantageux, plus en aval, lorsqu'on les utilise pour alimenter une presse à injecter, en raison d'une imbrication alors plus facile dans la presse à injecter, qui peut se traduire par un gain de temps extrêmement important, par exemple 18 secondes au lieu de 25 secondes pour le dosage d'une carrure de montre en céramique.

Dans cet exemple d'une charge de 5 kg, le temps de cycle moteur total est compris entre 20 et 30 minutes, le temps total de refroidissement est compris entre 15 et 30 minutes, le temps total d'évacuation est compris entre 5 et 15 minutes.

De façon particulière, on met en oeuvre ce procédé en utilisant une :composition de moulage par injection (feedstock) destinée à la fabrication de pièces de forme métalliques ou céramiques comprenant 76 à 96 % en poids d'une poudre inorganique et 4 à 24 % en poids de liant comprenant :
- au moins 35% à en volume d'une base polymérique,
- de 40 à 55 % en volume d'un mélange de cires,
- et environ 10% en volume d'un surfactant,
dans lequel la base polymérique contient des copolymères d'éthylène et d'acide méthacrylique ou acrylique, ou des copolymères d'éthylène et d'acétate de vinyle, ou des copolymères d'éthylène comprenant un anhydride maléique ou un mélange de ces copolymères, ainsi que du polyéthylène, du polypropylène et une résine acrylique.

Une telle séquence convient aussi pour un autre mélange de matières premières, étranger à l'invention, comportant 14% en masse d'un liant qui comporte lui-même 50% en volume d'un matériau constitutif d'une matrice structurante, 42% d'un matériau constitutif d'une matrice fluidisante, et 8% d'un matériau constitutif d'une matrice surfactante.

De façon particulière, on met en oeuvre ce procédé en utilisant un liant selon l'invention, d'un des types décrits plus haut, et comprenant notamment :
- au moins 35% en volume d'une base polymérique,
- de 40 à 55 % en volume d'un mélange de cires,
- et environ 10% en volume d'un surfactant,
dans lequel la base polymérique contient des copolymères d'éthylène et d'acide méthacrylique ou acrylique, ou des copolymères d'éthylène et d'acétate de vinyle, ou des copolymères d'éthylène comprenant un anhydride maléique ou un mélange de ces copolymères, ainsi que du polyéthylène, du polypropylène et une résine acrylique.

Cette gamme de travail, utilisée avec un malaxeur 1 tel que défini plus haut, permet de prévenir de nombreux aléas de l'art antérieur :
- tous les gradients de température sont maîtrisés et précis ;
- la montée en température du mélange et de la masse compacte est strictement limitée à un seuil maximal prédéfini, ici égal à TSUP=T6=190°C ;
- la durée de refroidissement est réduite grâce au moyen d'échange de chaleur qui permet un refroidissement de la masse compacte;
- la température de la masse compacte peut être maintenue à une valeur donnée lorsque la rotation de l'arbre est stoppée, grâce au moyen d'échange de chaleur qui permet un réchauffement ou un refroidissement de la masse compacte, par l'intermédiaire de la cuve ;
- la température de la masse compacte est correctement approximée par la température de la cuve, elle est encore mieux déterminée avec un capteur immergé, soit en contrôle manuel, soit avec une sonde manipulée par un bras robotisé ;
- la poudre du mélange ne se colle plus sur les parois de la cuve lors de la montée en température, grâce à la maîtrise de la vitesse de rotation des pales lors du prémix à froid des constituants, à vitesse basse ;
- la régulation permet de limiter l'usure de la paroi de la cuve et celle des pales/couteaux, et de ce fait la pollution est très fortement réduite, et le matériel s'use beaucoup moins vite;
- la conduite du process peut être effectuée avec la cuve fermée ; une surveillance optique, notamment par caméra, peut permettre de déterminer un éventuel besoin de raclage des parois de la cuve, qui théoriquement est moins encrassée que dans l'art antérieur grâce à une montée progressive en température, et une maîtrise de la vitesse de rotation de la pâte ;
- l'homogénéisation du mélange de la masse compacte est satisfaisante, et de ce fait les granulés feedstock ont un comportement identique et répétitif au niveau du pressage par injection ;
- les consommations d'énergie d'entraînement, de chauffage, et de refroidissement, sont réduites.

## Revendications

1. Procédé de malaxage de matière première pour métallurgie des poudres, en particulier pour la fabrication de granulés feedstock d'un type de céramique donné à partir d'un mélange particulier comportant, d'une part au moins une poudre inorganique d'au moins un élément de type oxyde ou cermet ou métal ou nitrure ou d'au moins un composé comportant au moins un desdits éléments, et d'autre part au moins un liant, selon lequel procédé :
- on le met en oeuvre en utilisant un liant comprenant:
- au moins 35 % en volume d'une base polymérique,
- de 40 à 55 % en volume d'un mélange de cires,
- 10% en volume d'un surfactant,
le total de ladite base polymérique et dudit mélange de cires et dudit surfactant étant égal à 100%,
dans lequel la base polymérique contient des copolymères d'éthylène et d'acide méthacrylique ou acrylique, ou des copolymères d'éthylène et d'acétate de vinyle, ou des copolymères d'éthylène comprenant un anhydride maléique ou un mélange de ces copolymères, ainsi que du polyéthylène, du polypropylène et une résine acrylique ;
- on introduit ledit mélange particulier dans une cuve (2) que comporte un malaxeur (1) comportant au moins un moyen de malaxage (3) ;
- on équipe ledit malaxeur (3) de moyens d'échange thermique (4) à un premier circuit (8) d'échange thermique de maintien en température de malaxage ;
- on stabilise en température, par connexion desdits moyens d'échange thermique (4) audit premier circuit (8) d'échange thermique de maintien en température de malaxage, ladite cuve (2) et son contenu au voisinage d'une température de malaxage comprise entre une température inférieure (TINF) à partir de laquelle ledit mélange particulier parvient à l'état pâteux, et à une température supérieure (TSUP) en-dessous de laquelle doit rester ledit mélange particulier, et on équipe lesdits moyens d'échange thermique (4) de moyens de réchauffement (41) agencés pour le chauffage de ladite cuve (2) ou/et de son contenu à une température comprise entre ladite température inférieure (TINF) et ladite température supérieure (TSUP), ladite température inférieure (TINF) et ladite température supérieure (TSUP) étant mémorisées, pour ledit mélange particulier correspondant à un type de céramique donné, et on pilote lesdits moyens d'échange thermique (4), de façon à ce que lesdits moyens de réchauffement (41) échangent l'énergie, dans une première connexion, avec ledit premier circuit (8) d'échange thermique de maintien en température de malaxage, que l'on installe externe à ladite cuve (2) et tel que l'inertie thermique dudit premier circuit (8) est supérieure à celle de ladite cuve (2) à pleine charge dudit mélange particulier;
- on met en mouvement à vitesse inférieure ou égale à 700 tours par minute ledit moyen de malaxage (3) ;
- on effectue le malaxage dudit mélange jusqu'à l'obtention d'une masse compacte homogène ;
- on arrête la stabilisation à température élevée, supérieure ou égale à une température (T5) propre au mélange considéré et caractéristique d'une masse compacte homogène, de ladite cuve (2) et de son contenu dont on autorise la descente en température.

2. Procédé de malaxage selon la revendication 1, **caractérisé en ce qu'**on équipe ledit malaxeur (1) de moyens de pilotage (5) connectés à des moyens de mesure (6) et à des moyens de mémorisation (7) de paramètres de température propres au type de matériau à réaliser, lesdits paramètres de température comportant une température inférieure (TINF) à partir de laquelle un mélange correspondant à un type de céramique donné parvient à l'état pâteux, et une température supérieure (TSUP) en-dessous de laquelle doit rester ledit mélange correspondant audit type de céramique donné, et **en ce que** lesdits moyens de pilotage (5) pilotent lesdits moyens d'échange thermique (4).

3. Procédé de malaxage selon la revendication 1 ou 2, **caractérisé en ce qu'**on réalise ledit premier circuit (8) avec une inertie thermique qui est supérieure à celle de ladite cuve (2) à pleine charge dudit mélange dans un premier facteur (K1) supérieur à 2.

4. Procédé de malaxage selon l'une des revendications 1 à 3, **caractérisé en ce qu'**on équipe lesdits moyens d'échange thermique (4) de moyens de refroidissement (42) qui sont agencés pour échanger l'énergie, dans une deuxième connexion, avec un deuxième circuit (9) à température ambiante voisine de 20°C, externe à ladite cuve (2), et distinct dudit premier circuit (8), et dont l'inertie thermique dudit deuxième circuit (9) est très supérieure à celle de ladite cuve (2) à pleine charge dudit mélange, et **en ce que**, pour limiter ou réduire la température dudit mélange particulier, ou/et quand on arrête la stabilisation à température élevée, supérieure ou égale à une température propre au mélange considéré et caractéristique d'une masse compacte homogène, de ladite cuve et de son contenu, on effectue la descente en température de ladite cuve et de son contenu, on pilote, avec un gradient négatif de température, lesdits moyens d'échange thermique (4) et lesdits moyens de refroidissement (42).

5. Procédé de malaxage selon la revendication 4, **caractérisé en ce qu'**on réalise ledit deuxième circuit (9) avec une inertie thermique qui est supérieure à celle de ladite cuve (2) à pleine charge dudit mélange dans un deuxième facteur (K2) supérieur à 2.

6. Procédé de malaxage selon l'une des revendications 1 à 5, **caractérisé en ce que**, pendant ou après ladite descente en température, on concasse ladite masse compacte, ou bien dans ladite cuve à une température inférieure à 100°C et à vitesse supérieure ou égale à 700 tours par minute dudit moyen de malaxage.

7. Procédé selon l'une des revendications 1 à 6, caractérisé à ce qu'on l'applique à la production de volumes de plusieurs litres d'un mélange particulier de céramique à base d'oxyde de zirconium, avec les étapes suivantes:
- 100 : on déverse, directement dans ladite cuve (2) ou au niveau d'une alimentation (21) en amont de ladite cuve (2), une première partie d'une charge de poudre et de structurants, comportant de la poudre et des plastiques polymères, on lance un régulateur de température de cuve à la température maximale de T0=180°C par activation desdits moyens de réchauffement (41), on démarre la rotation d'un arbre de malaxage (30) dans ladite cuve (2) à une vitesse V0=300 tours par minute ;
- 110 : après l'atteinte d'une température de T1=145°C et d'une vitesse de rotation de V1=300 tours par minute dudit arbre de malaxage (30), on déverse une deuxième partie constituant le reste de la charge de liants;
- 120 : après l'atteinte d'une température de T2=160°C, on arrête la rotation dudit arbre (30) ;
- on inspecte le contenu de ladite cuve (2) et dudit arbre (30) dont on racle si nécessaire des pales ou/et couteaux que comporte ledit arbre (30) ;
- 130 : on remet en rotation ledit arbre (30) ;
- après l'atteinte d'une température de T3=168°C et d'une vitesse de rotation de V3=700 tours par minute, on arrête la rotation dudit arbre (30) ;
- 135 : on inspecte le contenu de ladite cuve (2) et dudit arbre (30) ;
- 136 : on racle si nécessaire les pales ou/et couteaux que comporte ledit arbre (30) ;
- 140: on remet en rotation ledit arbre (30), et, après l'atteinte d'une température de TINF=T4=170°C et d'une vitesse de rotation de V4=700 tours par minute, on malaxe le mélange pendant une durée D4 pré-définie propre audit mélange particulier;
- 150 : on mesure la température de la masse compacte obtenue, qui doit être comprise entre T5=180°C et TSUP=T6=190°C (test étape 155), on poursuite le malaxage jusqu'à l'atteinte de cette fourchette de températures ;
- 160 : on arrête la rotation dudit arbre (30), on refroidit ladite masse compacte par désactivation desdits moyens de réchauffement (41;
- 170 : après l'atteinte d'une température comprise entre T7=150°C et T8=180°C (test étape 175), on met en rotation ladite masse compacte pour débloquer les pales/couteaux dudit arbre (30) et/ou améliorer le cisaillement ;
- 180 : on commande des rotations ponctuelles dudit arbre (30) à V9=300 tours par minute pour constituer une galette, et on refroidit ladite galette à une température comprise entre T9=95°C et T10=110°C, ledit refroidissement étant effectué, ou bien par passage en mode refroidissement du système de régulation de température avec un gradient négatif de l'ordre de -2°C par minute, ou bien par désactivation desdits moyens de réchauffement (41).

8. Procédé selon les revendications 4 et 7, **caractérisé en ce qu'**on effectue des refroidissements particuliers lors des étapes suivantes:
- 100: on lance un régulateur de température de cuve à la température maximale de T0=180°C par activation desdits moyens de réchauffement (41) et désactivation desdits moyens de refroidissement (42),
- 160 : on refroidit ladite masse compacte par désactivation desdits moyens de réchauffement (41) et activation desdits moyens de refroidissement (42) ;
- 180 : on refroidit ladite galette à une température comprise entre T9=95°C et T10=110°C, ledit refroidissement étant effectué, ou bien par passage en mode refroidissement du système de régulation de température avec un gradient négatif de l'ordre de -2°C par minute, ou bien par désactivation desdits moyens de réchauffement (41) et activation desdits moyens de refroidissement (42).

9. Procédé selon la revendication 7 ou 8, **caractérisé en ce qu'**on utilise un dit malaxeur (1) équipé de moyens de concassage dans ladite cuve (2), et une dite cuve (2) équipée d'un revêtement interne contre l'abrasion, et qu'on effectue après refroidissement de ladite galette les étapes suivantes directement dans ladite cuve (2) :
- 200 : concassage à V11=700 tours par minute ;
- 210 : on arrête la rotation dudit arbre (30) ;
- 220 : on évacue le produit obtenu à moins de V12=2000 tours par minute et à moins de T12=85°C.

10. Procédé selon la revendication 9, **caractérisé en ce qu'**on effectue ledit concassage à une vitesse supérieure à 100 tours par minute pour obtenir un farinage du produit sous forme de poudre, une évacuation ou extrusion par vis, et un conditionnement en pellets.

11. Procédé selon l'une des revendications 1 à 10, **caractérisé en ce qu'**on le met en oeuvre en utilisant une composition de moulage par injection (feedstock) destinée à la fabrication de pièces de forme métalliques ou céramiques comprenant 76 à 96 % en poids d'une poudre inorganique et 4 à 24 % en poids dudit liant, et où on choisit ladite poudre inorganique de la composition de moulage parmi l'ensemble comprenant une poudre d'oxyde, de nitrure, de carbure, de métal, ou un mélange de ces dites poudres.

12. Procédé selon la revendication 11, **caractérisé en ce qu'**on choisit ladite poudre inorganique parmi l'ensemble comprenant une poudre d'alumine, une poudre d'oxyde de zirconium, une poudre de carbure de chrome, une poudre de carbure de titane ou une poudre de carbure de tungstène, une poudre de tungstène métallique ou de nitrure de silicium, une poudre d'acier inoxydable, une poudre de titane métallique ou un mélanges de ces poudres.

13. Procédé selon la revendication 12, **caractérisé en ce qu'**on choisit ladite composition de moulage contenant, en % poids :
• 76 à 88 % d'alumine et 12 à 24% dudit liant, ou
• 76 à 88% d'alumine et 0.1 à 0.6% d'oxyde de magnésium et 12 à 24% dudit liant, ou
• 58 à 86.5 % d'oxyde zirconium et 3.9 à 4.6% d'oxyde d'yttrium et 0.18 à 18.5% d'alumine et 9 à 22% dudit liant, ou
• 61.5 à 84% d'oxyde de zirconium et 3.9 à 4.6% d'oxyde d'yttrium et 0.2 à 9% d'alumine et 2 à 5.5% de pigments inorganique d'une liste comprenant de l'oxyde de fer, de l'oxyde de cobalt, de l'oxyde de chrome, de l'oxyde de titane, de l'oxyde de manganèse, de l'oxyde de zinc ou d'un mélange des dits oxydes et de 9 à 22% dudit liant, ou
• de 88 à 91 % de carbure de chrome ou de titane, et de 9 à 12% dudit liant, ou
• de 93 à 96 % de carbure de tungstène ou de tungstène métallique et de 4 à 7% dudit liant, ou
• de 78 à 85% de nitrure de silicium et de 15 à 22% dudit liant.

14. Procédé selon l'une des revendications 1 à 13, **caractérisé en ce qu'**on le met en oeuvre en utilisant un malaxeur (1) comportant au moins une dite cuve (2) dans laquelle est mobile au moins un dit moyen de malaxage (3), et comportant lesdits moyens d'échange thermique (4) qui comportent des moyens de réchauffement (41) agencés pour le chauffage de ladite cuve (2) ou/et de son contenu, lesquels moyens de réchauffement (41) sont agencés pour échanger l'énergie, dans une première connexion, avec ledit premier circuit (8) d'échange thermique de maintien en température de malaxage, externe à ladite cuve (2), et dont l'inertie thermique dudit premier circuit (8) est supérieure à celle de ladite cuve (2) à pleine charge dudit mélange, lesdits moyens d'échange thermique (4) comportant encore des moyens de refroidissement (42) qui sont agencés pour échanger l'énergie, dans une deuxième connexion, avec un deuxième circuit (9) à température ambiante, externe à ladite cuve (2), et distinct dudit premier circuit (8), et dont l'inertie thermique dudit deuxième circuit (9) est très supérieure à celle de ladite cuve (2) à pleine charge dudit mélange, et **en ce que** ledit malaxeur (1) comporte des moyens de pilotage (5) connectés à des moyens de mesure (6) et à des moyens de mémorisation (7) de paramètres de température en fonction du type de matériau à réaliser, et **en ce que** lesdits moyens de pilotage (5) sont agencés pour piloter lesdits moyens d'échange thermique (4), **en ce que** lesdits moyens de réchauffement (41) sont agencés pour le chauffage de ladite cuve (2) ou/et de son contenu à une température comprise entre ladite température inférieure (TINF) et ladite température supérieure (TSUP), ladite température inférieure (TINF) et ladite température supérieure (TSUP) étant mémorisées dans lesdits moyens de mémorisation (7) pour ledit mélange correspondant à un type de céramique donné.

15. Procédé selon la revendication 14, **caractérisé en ce que** lesdits moyens de pilotage (5) sont agencés pour piloter lesdits moyens d'échange thermique (4) de façon à activer l'échange thermique avec ladite cuve (2), à un instant donné, des seuls moyens de refroidissement (42) ou des seuls dits moyens de réchauffement (41).

16. Procédé selon la revendication 14 ou 15, **caractérisé en ce que** lesdits moyens de pilotage (5), sur la base d'au moins une information de vitesse dudit moyen de malaxage (3) ou d'une masse de produit en cours de transformation par ledit malaxeur (1), et d'au moins une information de température de ladite cuve (2) ou de ladite masse de produit, relevées par des capteurs que comportent lesdits moyens de mesure (6), sont agencés pour commander, d'une part la vitesse d'un moteur (31) agencé pour entraîner directement ou indirectement un arbre de malaxage (30) que comporte ledit moyen de malaxage (3), et d'autre part un débit d'échange thermique par une première pompe (81) sur ledit premier circuit (8) desdits moyens de réchauffement (41).

17. Procédé selon la revendication 14 ou 15, **caractérisé en ce que** lesdits moyens de refroidissement (42) sont agencés pour échanger l'énergie, dans ladite deuxième connexion, avec ledit deuxième circuit (9), lesdits moyens de pilotage (5) étant agencés pour commander un débit d'échange thermique par une deuxième pompe (91) sur ledit deuxième circuit (9) desdits moyens de refroidissement (42).

18. Procédé selon l'une des revendications 14 à 17, **caractérisé en ce que** lesdits moyens de pilotage (5) sont agencés pour commander un premier régulateur (82) agencé pour effectuer un apport ou un enlèvement de chaleur audit premier circuit (8), ou/et un deuxième régulateur (92) agencé pour effectuer un enlèvement ou un apport de chaleur audit deuxième circuit (9).

19. Procédé selon l'une des revendications 14 à 18, **caractérisé en ce que** lesdits moyens de mesure (6) comportent un capteur de mouvement (64) caractérisant le mouvement de pâte dans ladite cuve (2), sous forme d'un capteur de vitesse de rotation d'un mobile (60) monté libre en fond de cuve, et un capteur de température (65) au coeur du mélange ou de la pâte, couplé avec ledit capteur de mouvement (64).

20. Procédé selon l'une des revendications 14 à 19, **caractérisé en ce que** lesdits moyens de mesure (6) comportent un capteur de température (67) d'un arbre de malaxage (30) que comporte ledit moyen de malaxage (3), au voisinage du fond de ladite cuve (2).

21. Procédé selon l'une des revendications 14 à 20, **caractérisé en ce que** l'inertie thermique dudit premier circuit (8) est supérieure à celle de ladite cuve (2) à pleine charge dudit mélange dans un premier facteur (K1) supérieur à 2.

22. Procédé selon l'une des revendications 14 à 21, **caractérisé en ce que** l'inertie thermique dudit deuxième circuit (9) est très supérieure à celle de ladite cuve (2) à pleine charge dudit mélange dans un deuxième facteur (K2) supérieur à 2.

## Patentansprüche

1. Verfahren zum Mischen eines Ausgangsmaterials für die Pulvermetallurgie, insbesondere für die Herstellung von Feedstock-Granulaten eines bestimmten Keramiktyps aus einem speziellen Gemisch, umfassend einerseits mindestens ein anorganisches Pulver mindestens eines Elements vom Typ Oxid oder Cermet oder Metall oder Nitrid oder mindestens einer Zusammensetzung, die mindestens eines der Elemente enthält, und andererseits mindestens ein Bindemittel, wobei gemäß dem Verfahren:
- es unter Verwendung eines Bindemittels ausgeführt wird, das umfasst:
- mindestens 35 Vol.-% einer Polymerbasis,
- 40 bis 55 Vol.-% eines Gemisches von Wachsen,
- 10 Vol.-% eines oberflächenaktiven Mittels,
wobei die Summe der Polymerbasis und des Gemisches von Wachsen und des oberflächenaktiven Mittels gleich 100 % ist,
wobei die Polymerbasis Ethylen- und Methacrylsäure- oder Acrylsäurecopolymere oder Ethylen- und Vinylacetatcopolymere oder Ethylencopolymere mit einem Maleinsäureanhydrid oder ein Gemisch dieser Copolymere sowie Polyethylen, Polypropylen und ein Acrylharz enthält;
- das spezielle Gemisch in einen Bottich (2) eingeführt wird, den ein Rührer (1) mit mindestens einem Rührmittel (3) umfasst;
- der Rührer (3) mit Wärmeaustauschmitteln (4) in einem ersten Wärmeaustauschkreis (8) zum Halten der Mischtemperatur ausgestattet wird;
- durch Verbinden der Wärmeaustauschmittel (4) mit dem ersten Wärmeaustauschkreis (8) zum Halten der Mischtemperatur der Bottich (2) und sein Inhalt in der Nähe einer Mischtemperatur in der Temperatur stabilisiert werden, die zwischen einer unteren Temperatur (TINF), ab der das spezielle Gemisch in den pastösen Zustand gelangt, und einer oberen Temperatur (TSUP), unter der das spezielle Gemisch bleiben muss, liegt, und die Wärmeaustauschmittel (4) mit Heizmitteln (41) zum Heizen des Bottichs (2) oder/und seines Inhalts auf eine Temperatur zwischen der unteren Temperatur (TINF) und der oberen Temperatur (TSUP) ausgestattet werden, wobei die untere Temperatur (TINF) und die obere Temperatur (TSUP) für das spezielle Gemisch gespeichert werden, das einem bestimmten Keramiktyp entspricht, und die Wärmeaustauschmittel (4) so gesteuert werden, dass die Heizmittel (41) in einer ersten Verbindung mit dem ersten Wärmeaustauschkreis (8) zum Halten der Mischtemperatur, der außerhalb des Bottichs (2) installiert wird, Energie austauschen, und so, dass die thermische Trägheit des ersten Kreises (8) höher ist als jene des Bottichs (2) bei voller Ladung des speziellen Gemisches;
- das Rührmittel (3) mit einer Drehzahl kleiner als oder gleich 700 Umdrehungen pro Minute in Bewegung versetzt wird;
- das Mischen des Gemisches bis zum Erhalten einer homogenen kompakten Masse durchgeführt wird;
- die Stabilisierung des Bottichs (2) und seines Inhalts, dessen Temperaturabfall gestattet wird, bei erhöhter Temperatur, die höher als oder gleich einer Temperatur (T5) ist, die für das betrachtete Gemisch geeignet ist und für eine homogene kompakte Masse charakteristisch ist, angehalten wird.

2. Mischungsverfahren nach Anspruch 1, **dadurch gekennzeichnet, dass** der Rührer (1) mit Steuermitteln (5) ausgestattet ist, die mit Messmitteln (6) und mit Mitteln (7) zum Speichern der Temperaturparameter verbunden sind, die für den herzustellenden Materialtyp geeignet sind, wobei die Temperaturparameter eine untere Temperatur (TINF), ab der ein Gemisch, das einem gegebenen Keramiktyp entspricht, in den pastösen Zustand gelangt, und eine obere Temperatur (TSUP), unter der das Gemisch bleiben muss, das dem gegebenen Keramiktyp entspricht, umfassen, und dass die Steuermittel (5) die Wärmeaustauschmittel (4) steuern.

3. Mischungsverfahren nach Anspruch 1 oder 2, **dadurch gekennzeichnet, dass** der erste Kreis (8) mit einer thermischen Trägheit gebildet wird, die um einen ersten Faktor (K1) größer als 2, größer ist als jene des Bottichs (2) bei voller Gemischladung.

4. Mischungsverfahren nach einem der Ansprüche 1 bis 3, **dadurch gekennzeichnet, dass** die Wärmeaustauschmittel (4) mit Kühlmitteln (42) ausgestattet werden, die zum Austausch von Energie angeordnet sind in einer zweiten Verbindung mit einem zweiten Kreis (9) auf Umgebungstemperatur von etwa 20 °C, der sich außerhalb des Bottichs (2) befindet und vom ersten Kreis (8) verschieden ist, und wobei die thermische Trägheit des zweiten Kreises (9) viel größer ist als jene des Bottichs (2) bei voller Gemischladung, und dass, um die Temperatur des speziellen Gemisches zu begrenzen oder zu verringern, oder/und dann, wenn die Stabilisierung des Bottichs und seines Inhalts bei erhöhter Temperatur, die höher als oder gleich einer Temperatur ist, die für das betrachtete Gemisch geeignet ist und für eine homogene kompakte Masse charakteristisch ist, angehalten wird, der Temperaturabfall des Bottichs und seines Inhalts bewirkt wird und die Wärmeaustauschmittel (4) und die Kühlmittel (42) mit einem negativen Temperaturgradienten gesteuert werden.

5. Mischungsverfahren nach Anspruch 4, **dadurch gekennzeichnet, dass** der zweite Kreis (9) mit einer thermischen Trägheit gebildet ist, die um einen zweiten Faktor (K2) größer als 2 größer ist als jene des Bottichs (2) bei voller Gemischladung.

6. Mischungsverfahren nach einem der Ansprüche 1 bis 5, **dadurch gekennzeichnet, dass** während oder nach dem Temperaturabfall die kompakte Masse in dem Bottich bei einer Temperatur von weniger als 100 °C und mit einer Drehzahl von mehr als oder gleich 700 Umdrehungen pro Minute des Rührmittels zerkleinert wird.

7. Verfahren nach einem der Ansprüche 1 bis 6, **dadurch gekennzeichnet, dass** es auf die Herstellung von Volumina von mehreren Litern eines speziellen Gemisches einer Keramik auf der Basis von Zirkoniumoxid mit den folgenden Schritten angewendet wird:
- 100: Schütten eines ersten Teils einer Ladung aus Pulver und Strukturbildungsmitteln, die Pulver und Polymerkunststoffe enthalten, direkt oder auf Höhe einer Versorgung (21) stromaufwärts des Bottichs (2) in den Bottich (2), Starten eines Bottichtemperaturregulierers mit der maximalen Temperatur von T0 = 180 °C durch Aktivieren der Heizmittel (41) und Beginnen mit der Drehung einer Rührwelle (30) im Bottich (2) mit einer Drehzahl V0 = 300 Umdrehungen pro Minute;
- 110: nach Erreichen einer Temperatur von T1 = 145 °C und einer Drehzahl von V1 = 300 Umdrehungen pro Minute der Rührwelle (30) Schütten eines zweiten Teils, der den Rest der Ladung an Bindemitteln bildet;
- 120: nach Erreichen einer Temperatur von T2 = 160 °C Anhalten der Drehung der Welle (30);
- Untersuchen des Inhalts des Bottichs (2) und der Welle (30), deren Schaufeln oder/und Messer, die die Welle (30) umfasst, falls erforderlich abgeschabt werden;
- 130: Erneutes Versetzen der Welle (30) in Drehung;
- nach Erreichen einer Temperatur von T3 = 168 °C und einer Drehzahl von V3 = 700 Umdrehungen pro Minute, Anhalten der Drehung der Welle (30);
- 135: Untersuchen des Inhalts des Bottichs (2) und der Welle (30);
- 136: falls erforderlich, Abschaben der Schaufeln oder/und der Messer, die die Welle (30) aufweist;
- 140: Erneutes Versetzen der Welle (30) in Drehung und nach Erreichen einer Temperatur von TINF = T4 = 170 °C und einer Drehzahl von V4 = 700 Umdrehungen pro Minute Mischen des Gemisches während einer vordefinierten Dauer D4, die für das spezielle Gemisch geeignet ist;
- 150: Messen der Temperatur der erhaltenen kompakten Masse, die zwischen T5 = 180 °C und TSUP = T6 = 190 °C liegen muss (Testschritt 155), und Fortsetzen des Rührens bis zum Erreichen dieses Bereichs von Temperaturen;
- 160: Anhalten der Drehung der Welle (30), Abkühlen der kompakten Masse durch Deaktivieren der Heizmittel (41);
- 170: nach dem Erreichen einer Temperatur zwischen T7 = 150 °C und T8 = 180 °C (Testschritt 175), Versetzen der kompakten Masse in Drehung, um die Schaufeln/Messer der Welle (30) zu entriegeln oder/und die Scherung zu verbessern;
- 180: Steuern punktueller Drehungen der Welle (30) mit V9 = 300 Umdrehungen pro Minute, um einen Rohling zu bilden, und Abkühlen des Rohlings auf eine Temperatur zwischen T9 = 95 °C und T10 = 110 °C, wobei die Abkühlung entweder durch Übergang in den Kühlmodus des Temperaturregulierungssystems mit einem negativen Gradienten in der Größenordnung von -2 °C pro Minute oder durch Deaktivieren der Heizmittel (41) durchgeführt wird.

8. Verfahren nach den Ansprüchen 4 und 7, **dadurch gekennzeichnet, dass** besondere Abkühlungen in den folgenden Schritten durchgeführt werden:
- 100: Starten eines Bottichtemperaturregulierers auf einer maximalen Temperatur von T0 = 180 °C durch Aktivieren der Heizmittel (41) und Deaktivieren der Kühlmittel (42);
- 160: Abkühlen der kompakten Masse durch Deaktivieren der Heizmittel (41) und Aktivieren der Kühlmittel (42);
- 180: Abkühlen des Rohlings auf eine Temperatur zwischen T9 = 95 °C und T10 = 110 °C, wobei die Abkühlung entweder durch Übergang in den Kühlmodus des Temperaturregulierungssystems mit einem negativen Gradienten in der Größenordnung von -2 °C pro Minute oder durch Deaktivieren der Heizmittel (41) und Aktivieren der Kühlmittel (42) durchgeführt wird.

9. Verfahren nach Anspruch 7 oder 8, **dadurch gekennzeichnet, dass** ein Rührer (1), der mit Zerkleinerungsmitteln in dem Bottich (2) ausgestattet ist, und ein Bottich (2), der mit einer inneren Beschichtung gegen Abrieb versehen ist, verwendet werden, und dass nach dem Abkühlen des Rohlings die folgenden Schritte direkt im Bottich (2) durchgeführt werden:
- 200: Zerkleinern mit V11 = 700 Umdrehungen pro Minute;
- 210: Anhalten der Drehung der Welle (30);
- 220: Entnehmen des erhaltenen Produkts mit weniger als V12 = 2000 Umdrehungen pro Minute und mit weniger als T12 = 85 °C.

10. Verfahren nach Anspruch 9, **dadurch gekennzeichnet, dass** das Zerkleinern mit einer Drehzahl größer als 100 Umdrehungen pro Minute durchgeführt wird, um eine Kreidung des Produkts in Form von Pulver, eine Entnahme oder Schneckenextrusion und eine Verpackung zu Pellets zu erhalten.

11. Verfahren nach einem der Ansprüche 1 bis 10, **dadurch gekennzeichnet, dass** es unter Verwendung einer Spritzgusszusammensetzung (Feedstock) ausgeführt wird, die für die Herstellung von metallischen oder keramischen Formstücken mit 76 bis 96 Gewichts-% eines anorganischen Pulvers und 4 bis 24 Gewichts-% des Bindemittels bestimmt ist, und wobei das anorganische Pulver der Gusszusammensetzung aus der Gruppe ausgewählt wird, die ein Pulver aus Oxid, Nitrid, Carbid, Metall oder ein Gemisch dieser Pulver umfasst.

12. Verfahren nach Anspruch 11, **dadurch gekennzeichnet, dass** das anorganische Pulver aus der Gruppe ausgewählt wird, die ein Aluminiumoxidpulver, ein Zirkoniumoxidpulver, ein Chromcarbidpulver, ein Titancarbidpulver oder ein Wolframcarbidpulver, ein Pulver aus metallischem Wolfram oder Siliziumnitrid, ein Edelstahlpulver, ein metallisches Titanpulver oder ein Gemisch dieser Pulver umfasst.

13. Verfahren nach Anspruch 12, **dadurch gekennzeichnet, dass** die Gusszusammensetzung gewählt wird, die in Gewichts-% enthält:
- 76 bis 88 % Aluminiumoxid und 12 bis 24 % des Bindemittels oder
- 76 bis 88 % Aluminiumoxid und 0,1 bis 0,6 % Magnesiumoxid und 12 bis 24 % des Bindemittels oder
- 58 bis 86,5 % Zirkoniumoxid und 3,9 bis 4,6 % Yttriumoxid und 0,18 bis 18,5 % Aluminiumoxid und 9 bis 22 % des Bindemittels oder
- 61,5 bis 84 % Zirkoniumoxid und 3,9 bis 4,6 % Yttriumoxid und 0,2 bis 9 % Aluminiumoxid und 2 bis 5,5 % anorganische Pigmente einer Liste, die Eisenoxid, Kobaltoxid, Chromoxid, Titanoxid, Manganoxid, Zinkoxid oder ein Gemisch der genannten Oxide umfasst und 9 bis 22 % des Bindemittels, oder
- 88 bis 91 % Chrom- oder Titancarbid und 9 bis 12 % des Bindemittels oder
- 93 bis 96 % Wolframcarbid oder metallisches Wolfram und 4 bis 7 % des Bindemittels oder
- 78 bis 85 % Siliziumnitrid und 15 bis 22 % des Bindemittels.

14. Verfahren nach einem der Ansprüche 1 bis 13, **dadurch gekennzeichnet, dass** es unter Verwendung eines Rührers (1) ausgeführt wird, umfassend mindestens einen Bottich (2), in dem mindestens ein Rührmittel (3) beweglich ist, und umfassend Wärmeaustauschmittel (4), die Heizmittel (41) aufweisen, die zum Heizen des Bottichs (2) oder/und seines Inhalts angeordnet sind, wobei die Heizmittel (41) zum Austausch von Energie angeordnet sind in einer ersten Verbindung mit dem ersten Wärmeaustauschkreis (8) zum Halten der Mischtemperatur, der sich außerhalb des Bottichs (2) befindet, und wobei die thermische Trägheit des ersten Kreises (8) größer ist als jene des Bottichs (2) bei voller Beladung des Gemisches, Energie auszutauschen, wobei die Wärmeaustauschmittel (4) auch Kühlmittel (42) umfassen, die dazu beschaffen sind, in einer zweiten Verbindung mit einem zweiten Kreis (9) auf Umgebungstemperatur, der sich außerhalb des Bottichs (2) befindet und vom ersten Kreis (8) verschieden ist, und wobei die thermische Trägheit des zweiten Kreises (9) viel größer ist als jene des Bottichs (2) bei voller Gemischladung, und dass der Rührer (1) Steuermittel (5) umfasst, die mit Messmitteln (6) und mit Mitteln (7) zum Speichern der Temperaturparameter in Abhängigkeit von dem Typ des herzustellenden Materials verbunden sind, und dass die Steuermittel (5) zum Steuern der Wärmeaustauschmittel (4) angeordnet sind, und dass die Heizmittel (41) zum Heizen des Bottichs (2) oder/und seines Inhalts auf eine Temperatur zwischen der unteren Temperatur (TINF) und der oberen Temperatur (TSUP) angeordnet sind, wobei die untere Temperatur (TINF) und die obere Temperatur (TSUP) in den Speichermitteln (7) für das Gemisch, das einem bestimmten Keramiktyp entspricht, gespeichert werden.

15. Verfahren nach Anspruch 14, **dadurch gekennzeichnet, dass** die Steuermittel (5) zum Steuern der Wärmeaustauschmittel (4) angeordnet sind, um den Wärmeaustausch nur der Kühlmittel (42) oder nur der Heizmittel (41) mit dem Bottich (2) in einem bestimmten Moment zu aktivieren.

16. Verfahren nach Anspruch 14 oder 15, **dadurch gekennzeichnet, dass** die Steuermittel (5) auf der Basis mindestens einer Information der Drehzahl des Rührmittels (3) oder einer Produktmasse im Verlauf der Umwandlung durch den Rührer (1) und mindestens einer Temperaturinformation des Bottichs (2) oder der Produktmasse, die durch Sensoren aufgenommen werden, die die Messmittel (6) umfassen, zum Steuern einerseits der Drehzahl eines Motors (31) für den direkten oder indirekten Antrieb einer Rührwelle (30), die das Rührmittel (3) umfasst, und andererseits einer Wärmeaustauschrate durch eine erste Pumpe (81) im ersten Kreis (8) der Heizmittel (41) angeordnet sind.

17. Verfahren nach Anspruch 14 oder 15, **dadurch gekennzeichnet, dass** die Kühlmittel (42) so angeordnet sind, dass sie in der zweiten Verbindung mit dem zweiten Kreis (9) Energie austauschen, wobei die Steuermittel (5) zum Steuern einer Wärmeaustauschrate durch eine zweite Pumpe (91) im zweiten Kreis (9) der Kühlmittel (42) angeordnet sind.

18. Verfahren nach einem der Ansprüche 14 bis 17, **dadurch gekennzeichnet, dass** die Steuermittel (5) zum Steuern eines ersten Regulierers (82), der so angeordnet ist, dass er eine Zufuhr oder eine Abfuhr von Wärme vom ersten Kreis (8) bewirkt, oder/und eines zweiten Regulierers (92), der so angeordnet ist, dass er eine Abfuhr oder eine Zufuhr von Wärme zum zweiten Kreis (9) bewirkt, angeordnet sind.

19. Verfahren nach einem der Ansprüche 14 bis 18, **dadurch gekennzeichnet, dass** die Messmittel (6) einen Bewegungssensor (64), die die Bewegung der Paste im Bottich (2) beschreibt und die Form eines Drehzahlsensors eines beweglichen Elements (60) hat, das frei am Boden des Bottichs montiert ist, und einen Temperatursensor (65) im Zentrum des Gemisches oder der Paste, der mit dem Bewegungssensor (64) gekoppelt ist, umfassen.

20. Verfahren nach einem der Ansprüche 14 bis 19, **dadurch gekennzeichnet, dass** die Messmittel (6) einen Temperatursensor (67) einer Rührwelle (30), die das Rührmittel (3) aufweist, in der Umgebung des Bodens des Bottichs (2) umfassen.

21. Verfahren nach einem der Ansprüche 14 bis 20, **dadurch gekennzeichnet, dass** die thermische Trägheit des ersten Kreises (8) um einen ersten Faktor (K1) größer als 2, größer ist als jene des Bottichs (2) bei voller Gemischladung.

22. Verfahren nach einem der Ansprüche 14 bis 21, **dadurch gekennzeichnet, dass** die thermische Trägheit des zweiten Kreises (9) um einen zweiten Faktor (K2) größer als 2, viel größer ist als jene des Bottichs (2) bei voller Gemischladung.

## Claims

1. Method of mixing raw material for powder metallurgy, in particular for the manufacture of feedstock granules of a given type of ceramic from a particular mixture including, on one hand, at least one inorganic powder of at least one oxide or cermet or metal or nitride element or of at least one compound including at least one of said elements, and, on the other, at least one binder, whereby:
- said method is carried out using a binder comprising:
-- at least 35% by volume of a polymeric base,
-- from 40 to 55% by volume of a wax mixture,
-- 10% by volume of a surfactant,
the total of said polymeric base and said wax mixture and said surfactant being equal to 100%,
wherein the polymeric base contains copolymers of ethylene and methacrylic or acrylic acid, or copolymers of ethylene and vinyl acetate, or copolymers of ethylene comprising a maleic anhydride or a mixture of these copolymers, as well as polyethylene, polypropylene and an acrylic resin;
- said particular mixture is introduced into a tank (2) that includes a mixer (1) including at least one mixing means (3);
- said mixer (3) is equipped with heat exchange means (4) with a first heat exchange circuit (8) for holding at a mixing temperature;
- the temperature is stabilised, by connecting said heat exchanger (4) to said first heat exchange circuit (8) for holding at a mixing temperature, said tank (2) and the contents thereof in the vicinity of a mixing temperature between a lower temperature (TINF) from which said particular mixture reaches the pasty state, and at an upper temperature (TSUP) below which said particular mixture should remain, and said heat exchange means (4) are equipped with heating means (41) arranged for heating said tank (2) or/and the contents thereof at a temperature between said lower temperature (TINF) and said upper temperature (TSUP), said lower temperature (TINF) and said upper temperature (TSUP) being stored, for said particular mixture corresponding to a given type of ceramic, and said heat exchange means (4) are controlled, such that said heating means (41) exchange the energy, in a first connection, with said first heat exchange circuit (8) for holding at a mixing temperature, that is installed external to said tank (2) and such that the thermal inertia of said first circuit (8) is greater than that of said tank (2) with a full load of said particular mixture;
- said mixing means (3) is set in motion at a speed less than or equal to 700 revolutions per minute;
- the mixing of said mixture is carried out until a homogeneous compact mass is obtained;
- the stabilisation is stopped at a high temperature, greater than or equal to a temperature (T5) specific to the mixture in question and characteristic of a homogeneous compact mass, of said tank (2) and of the contents thereof for which the lowering of the temperature is authorised.

2. Mixing method according to claim 1, **characterised in that** said mixer (1) is equipped with control means (5) connected to measuring means (6) and to storage means (7) of temperature settings specific to the type of material to be produced, said temperature settings including a lower temperature (TINF) from which a mixture corresponding to a given type of ceramic reaches the pasty state, and an upper temperature (TSUP) below which said mixture corresponding to said given type of ceramic should remain, and **in that** said control means (5) control said heat exchange means (4).

3. Mixing method according to claim 1 or 2, **characterised in that** said first circuit (8) is embodied with a thermal inertia that is greater than that of said tank (2) with a full load of said mixture in a first factor (K1) greater than 2.

4. Mixing method according to one of claims 1 to 3, **characterised in that** said heat exchange means (4) are equipped with cooling means (42) that are arranged to exchange the energy, in a second connection, with a second circuit (9) at ambient temperature close to 20°C, external to said tank (2), and separate from said first circuit (8), and wherein the thermal inertia of said second circuit (9) is considerably greater than that of said tank (2) with a full load of said mixture, and **in that**, to limit or reduce the temperature of said particular mixture, or/and when the stabilisation is stopped at a high temperature, greater than or equal to a temperature specific to the mixture in question and characteristic of a homogeneous compact mass, of said tank and of the contents thereof, the temperature of said tank and of the contents thereof is lowered, said heat exchange means (4) and said cooling means (42) are controlled with a negative temperature gradient.

5. Mixing method according to claim 4, **characterised in that** said second circuit (9) is embodied with a thermal inertia that is greater than that of said tank (2) with a full load of said mixture in a second factor (K2) greater than 2.

6. Mixing method according to one of claims 1 to 5, **characterised in that**, during or after said lowering of the temperature, said compact mass is crushed, or indeed in said tank at a temperature less than 100°C and at a speed greater than or equal to 700 revolutions per minute of said mixing means.

7. Method according to one of claims 1 to 6, **characterised in that** it is applied to the production of volumes of several litres of a particular mixture of ceramic based on zirconium oxide, with the following steps:
- 100: there is poured, directly into said tank (2) or at the level of a supply (21) upstream from said tank (2), a first part of a load of powder and structuring agents, including powder and polymer plastics, a tank temperature regulator is started at the maximum temperature of T0=180°C by activating said heating means (41), the rotation of a mixing shaft (30) is started up in said tank (2) at a speed V0=300 revolutions per minute;
- 110: after reaching a temperature of T1=145°C and a rotational speed of V1=300 revolutions per minute of said mixing shaft (30), there is poured a second part forming the remainder of the binder load;
- 120: after reaching a temperature of T2=160°C, the rotation of said shaft (30) is stopped;
- the contents of said tank (2) and of said shaft (30) are inspected, the blades or/and cutters whereof included in said shaft (30) are scraped if needed;
- 130: said shaft (30) is once again set in rotation;
- after reaching a temperature of T3=168°C and a rotational speed of V3=700 revolutions per minute, said rotation of said shaft (30) is stopped;
- 135: the contents of said tank (2) and of said shaft (30) are inspected;
- 136: the blades or/and cutters included in said shaft (30) are scraped if needed;
- 140: said shaft (30) is once again set in rotation, and, after reaching a temperature of TINF=T4=170°C and a rotational speed of V4=700 revolutions per minute, the mixture is mixed for a pre-defined duration D4 specific to said particular mixture;
- 150: the temperature of the compact mass obtained is measured, which must be between T5=180°C and TSUP=T6=190°C (test step 155), mixing is continued until this temperature range is reached;
- 160: the rotation of said shaft (30) is stopped, said compact mass is cooled by deactivating said heating means (41);
- 170: after reaching a temperature between T7=150°C and T8=180°C (test step 175), said compact mass is set in rotation to release the blades/cutters of said shaft (30) and/or enhance the shearing;
- 180: isolated rotations of said shaft (30) at V9=300 revolutions per minutes are actuated to form a cake, and said cake is cooled to a temperature between T9=95°C and T10=110°C, said cooling being carried out, either by switching to cooling mode of the temperature regulation system with a negative gradient of the order of -2°C per minute, or by deactivating said heating means (41).

8. Method according to claims 4 and 7, **characterised in that** particular cooling operations are carried out during the following steps:
- 100: a tank temperature regulator is started at the maximum temperature of T0=180°C by activating said heating means (41) and deactivating said cooling means (42),
- 160: said compact mass is cooled by deactivating said heating means (41) and activating said cooling means (42);
- 180: said cake is cooled to a temperature between T9=95°C and T10=110°C, said cooling being carried out, either by switching to cooling mode of the temperature regulation system with a negative gradient of the order of -2°C per minute, or by deactivating said heating means (41) and activating said cooling means (42).

9. Method according to claim 7 or 8, **characterised in that** a said mixer (1) equipped with crushing means in said tank (2), and a said tank (2) equipped with an abrasion-proof internal coating are used, and after cooling said cake the following steps are carried out directly in said tank (2):
- 200: crushing at V11=700 revolutions per minute;
- 210: the rotation of said shaft (30) is stopped;
- 220: the product obtained is discharged at less than V12=2000 revolutions per minute and at less than T12=85°C.

10. Method according to claim 9, **characterised in that** said crushing is carried out at a speed greater than 100 revolutions per minute to obtain chalking of the product in powder form, discharge or extrusion by screw, and packaging in pellets.

11. Method according to one of claims 1 to 10, **characterised in that** it is carried out using an injection moulding composition (feedstock) intended for the manufacture of metallic or ceramic form parts comprising 76 to 96% by weight of an inorganic powder and 4 to 24% by weight of said binder, and where said inorganic powder of the moulding composition is chosen from the set comprising an oxide, nitride, carbide, metal powder, or a mixture of said powders.

12. Method according to claim 11, **characterised in that** said inorganic powder is chosen from the set comprising an alumina powder, a zirconium oxide powder, a chromium carbide powder, a titanium carbide powder or a tungsten carbide powder, a metallic tungsten or silicon nitride powder, a stainless steel powder, a metallic titanium powder or a mixture of these powders.

13. Method according to claim 12, **characterised in that** said moulding composition is chosen containing, as a % by weight:
• 76 to 88% alumina and 12 to 24% of said binder, or
• 76 to 88% alumina and 0.1 to 0.6% magnesium oxide and 12 to 24% of said binder, or
• 58 to 86.5% zirconium oxide and 3.9 to 4.6% yttrium oxide and 0.18 to 18.5% alumina and 9 to 22% of said binder, or
• 61.5 to 84% zirconium oxide and 3.9 to 4.6% yttrium oxide and 0.2 to 9% alumina and 2 to 5.5% inorganic pigments from a list comprising iron oxide, cobalt oxide, chromium oxide, titanium oxide, manganese oxide, zinc oxide or a mixture of said oxides and from 9 to 22% of said binder, or
• from 88 to 91% chromium or titanium carbide, and from 9 to 12% of said binder, or
• from 93 to 96% tungsten carbide or metallic tungsten and from 4 to 7% of said binder, or
• from 78 to 85% silicon nitride and from 15 to 22% of said binder.

14. Method according to one of claims 1 to 13, **characterised in that** it is carried out using a mixer (1) including at least one said tank (2) wherein is movable at least one said mixing means (3), and including said heat exchange means (4) that include heating means (41) arranged for heating said tank (2) or/and the contents thereof, which heating means (41) are arranged to exchange the energy, in a first connection, with said first heat exchange circuit (8) for holding at a mixing temperature, external to said tank (2), and wherein the thermal inertia of said first circuit (8) is greater than that of said tank (2) with a full load of said mixture, said heat exchange means (4) further including cooling means (42) that are arranged to exchange the energy, in a second connection, with a second circuit (9) at ambient temperature, external to said tank (2), and separate from said first circuit (8), and wherein the thermal inertia of said second circuit (9) is considerably greater than that of said tank (2) with a full load of said mixture, and **in that** said mixer (1) includes control means (5) connected to measuring means (6) and to storage means (7) of temperature settings according to the type of material to be produced, and **in that in that** said control means (5) are arranged to control said heat exchange means (4), **in that** said heating means (41) are arranged for heating said tank (2) or/and the contents thereof at a temperature between said lower temperature (TINF) and said upper temperature (TSUP), said lower temperature (TINF) and said upper temperature (TSUP) being stored in said storage means (7) for said mixture corresponding to a given type of ceramic.

15. Method according to claim 14, **characterised in that** said control means (5) are arranged to control said heat exchange means (4) so as to activate the heat exchange with said tank (2), at a given time, of solely the cooling means (42) or of solely the heating means (41).

16. Method according to claim 14 or 15, **characterised in that** said control means (5), on the basis of at least one speed data item of said mixing means (3) or of a product mass being processed by said mixer (1), and at least one temperature data item of said tank (2) or of said product mass, measured by sensors included in measuring means (6), are arranged to control, on one hand, the speed of a motor (31) arranged to drive directly or indirectly a mixing shaft (30) included in said mixing means (3), and on the other a heat exchange flow rate by a first pump (81) on said first circuit (8) of said heating means (41).

17. Method according to claim 14 or 15, **characterised in that** said cooling means (42) are arranged to exchange the energy, in said second connection, with said second circuit (9), said control means (5) being arranged to control a heat exchange flow rate by a second pump (91) on said second circuit (9) of said cooling means (42).

18. Method according to one of claims 14 to 17, **characterised in that** said control means (5) are arranged to control a first regulator (82) arranged to supply or remove heat in respect of said first circuit (8), or/and a second regulator (92) arranged to remove or supply heat in respect of said second circuit (9).

19. Method according to one of claims 14 to 18, **characterised in that** said measuring means (6) include a motion sensor (64) characterising the motion of paste in said tank (2), in the form of a rotational speed sensor of a wheel (60) freely mounted at the tank bottom, and a temperature sensor (65) at the core of the mixture or the paste, coupled with said motion sensor (64).

20. Method according to one of claims 14 to 19, **characterised in that** said measuring means (6) include a temperature sensor (67) of a mixing shaft (30) included in said mixing means (3), in the vicinity of the bottom of said tank (2).

21. Method according to one of claims 14 to 20, **characterised in that** the thermal inertia of said first circuit (8) is greater than that of said tank (2) with a full load of said mixture in a first factor (K1) greater than 2.

22. Method according to one of claims 14 to 21, **characterised in that** the thermal inertia of said second circuit (9) is considerably greater than that of said tank (2) with a full load of said mixture in a second factor (K2) greater than 2.
